# EUROPÄISCHE PATENTSCHRIFT

(11) **EP 3 131 939 B1**
(45) Veröffentlichungstag und Bekanntmachung des Hinweises auf die Patenterteilung: **04.04.2018**
(21) Anmeldenummer: 15721132.7
(22) Anmeldetag: 15.04.2015
(51) Int. Cl.: C08G 18/28, C07C 273/18, C07C 275/40, C09D 5/04, C09D 7/00, C08G 18/32

(54) **ALS RHEOLOGIESTEUERUNGSMITTEL GEEIGNETE LAGERSTABILE HARNSTOFFZUBEREITUNGEN**
STORAGE-STABLE UREA PRODUCTS SUITABLE AS RHEOLOGY CONTROL AGENTS
PRÉPARATIONS D'URÉE STABLES EN STOCKAGE ADAPTÉES COMME MOYENS DE COMMANDE DE RHÉOLOGIE

(30) Priorität: 15.04.2014 EP 14164795
(43) Veröffentlichungstag der Anmeldung: 22.02.2017
(73) Patentinhaber: BYK-Chemie GmbH, 46483 Wesel (DE)
(72) Erfinder: LEUTFELD, Daniela, 46483 Wesel (DE); EBERHARDT, Marc, 46483 Wesel (DE); NAGELSDIEK, René, 46483 Wesel (DE); BÜHNE, Sylvia, 46483 Wesel (DE); OMEIS, Jürgen, 46483 Wesel (DE); JACOBS, Berthold, 46483 Wesel (DE)
(74) Vertreter: Leifert & Steffan
(86) Internationale Anmeldenummer: PCT/EP2015/058210
(87) Internationale Veröffentlichungsnummer: WO 2015/158794

(56) Entgegenhaltungen:
- EP-A1- 1 188 779
- US-A1- 2006 155 146

## Beschreibung

Die vorliegende Erfindung betrifft Harnstoffzubereitungen mit erhöhter Lagerstabilität, deren Verwendung zur Rheologiesteuerung flüssiger Mischungen und Formulierungen enthaltend die erfindungsgemäßen Harnstoffzubereitungen.

Um die Rheologie von flüssigen Systemen, insbesondere flüssigen Beschichtungssystemen, zu steuern, werden als rheologische Hilfsstoffe vorwiegend organisch modifizierte Bentonite, Kieselsäuren, hydriertes Rizinusöl und Polyamidwachse eingesetzt.

Nachteilig am Einsatz dieser rheologischen Hilfsstoffe ist, dass diese meist in Form von trockenen Feststoffen vorliegen. Folglich werden deshalb besagte rheologische Hilfsstoffe vor dem Einsatz unter Verwendung von Lösemitteln und Scherkräften zunächst zu einem Halbfabrikat aufgeschlossen. Alternativ können die noch nicht aufgeschlossenen rheologischen Hilfsstoffe auch so eingesetzt werden, dass diese durch gezielte Temperatursteuerung in das flüssige Anwendungssystem, beispielsweise ein Beschichtungssystem eingebracht werden. Erfolgt diese Temperatursteuerung nicht gemäß den Zielvorgaben, so treten im fertigen Beschichtungssystem typischerweise Kristallite auf, die zu Fehlern in der Beschichtung führen können.

Ein genereller Nachteil des Einsatzes dieser rheologischen Hilfsstoffe ist, dass diese Trübungen und Schleierbildungen (Haze) in klaren, transparenten Beschichtungen verursachen. Außerdem ist der Umgang mit trockenen, pulverförmigen Produkten, die Stäube bei der Verarbeitung verursachen können, unerwünscht.

Eine flüssige Anwendungsalternative zu diesen festen Rheologiesteuerungsmitteln stellen Lösungen von speziellen Harnstoffkomponenten dar. Derartige Lösungen werden häufig in der Praxis eingesetzt und sind beispielsweise in der EP-A-1188779 beschrieben. Als Lösemittel werden hierin explizit polare/aprotische Lösemittel wie Dimethylsulfoxid, Dimethylformamid, Dimethylacetamid, N-Methyl-Pyrrolidon und N-Butyl-Pyrrolidon genannt, wobei in den Beispielen ausschließlich Dimethylacetamid und N-Methyl-Pyrrolidon eingesetzt werden. Die DE-A-19919482 offenbart den Einsatz von Dimethylsulfoxid, Dimethylformamid und -acetamid, N-Methyl-Pyrrolidon, N-Butyl-Pyrrolidon und vergleichbaren N-Alkyl-Pyrrolidonen ohne letztere explizit zu nennen oder gar einzusetzen, als geeignete Medien zur Lösung von Harnstoffderivaten. In der EP-A-0006252 wird neben N-Methyl-Pyrrolidon, N-Butyl-Pyrrolidon, Dimethylsulfoxid, Dimethylformamid und -acetamid auch N,N,N',N'-Tetramethylharnstoff als geeignetes Lösemittel genannt. Im Rahmen der vorgenannten Erfindung wurde jedoch nur Dimethylsulfoxid, Dimethylformamid und N-Methyl-Pyrrolidon In den Beispielen eingesetzt. Als vorteilhafte Alternative gegenüber N-Methyl-Pyrrolidon wird in der DE-A-102008059702 der Einsatz sogenannter ionischer Flüssigkeiten vorgeschlagen, bei denen es sich de facto um Salzschmelzen handelt, welche bei moderaten Temperaturbedingungen (meist unter 80°C, im Idealfall bei Raumtemperatur) flüssig sind. Die rheologiesteuernden Eigenschaften gelöster Harnstoffkomponenten sind meist zwar recht gut, wobei jedoch in vielen Fällen der Wunsch nach einem noch weiter optimierten rheologiesteuernden Verhalten besteht. Ein optimiertes Verhalten äußert sich häufig nicht nur in verbesserter rheologischer Wirksamkeit, sondern ggf. auch in einer breiten Verträglichkeit in anwendungsrelevanten Formulierungen, beispielsweise Bindemittel enthaltenden Systemen.

Ein weiterer Aspekt, der im Zusammenhang mit in flüssiger Form bereitgestellten Rheologiehilfsmitteln zu beachten ist, ist deren Lagerstabilität. So können längere Lagerzeiten oder ein erhöhter Lagerstress, beispielsweise bei einer Lagerung unter Temperaturschwankungen, zu einer verminderten Lagerstabilität und damit einhergehend einer verringerten Wirksamkeit im Zielsystem führen. Während nämlich die Harnstoffkomponenten ihre rheologiesteuernde Wirkung in den Anwendungssystemen, beispielsweise durch Kristallisation in diesen Systemen entfalten sollen, so ist eine verdickende Wirkung der Harnstoffkomponenten oder gar ein Auskristallisieren in der Lagerform der Harnstoffzubereitung äußerst unerwünscht. Die bisherige Auswahl an lagerstabilen Zubereitungen ist im Wesentlichen auf Systeme beschränkt, welche die oben genannten Lösemittel enthalten. Die Auswahl geeigneter Lösemittel ist daher schwierig, da diese insbesondere mit den späteren Anwendungssystemen verträglich sein müssen, gleichzeitig auch eine ausreichende Lagerstabilität der bevorzugt flüssigen Komposition sicherstellen müssen und weitere Anforderungen (z.B. keine Reaktion des Lösemittels mit der rheologiesteuernden Komponente bzw. mit anderen Bestandteilen des Anwendungssystems) erfüllen muss.

Es besteht daher nach wie vor ein Bedarf an hinsichtlich der rheologischen Wirksamkeit und Lagerstabilität verbesserten Harnstoffzubereitungen. Die rheologische Wirksamkeit einer Zubereitung kann beispielsweise anhand des Standvermögens, das heißt der Ablaufgrenze eines mit der Harnstoffzubereitung formulierten Beschichtungsmittels ermittelt werden. Weiterhin werden Harnstoffformulierungen gefordert, die eine breite Verträglichkeit in anwendungsrelevanten Formulierungen wie beispielsweise Lacken besitzen. Insbesondere dürfen damit hergestellte Lacke möglichst keine Stippen-, Schleier-, und/oder Trübungsbildung aufweisen.

Somit besteht die Aufgabe der vorliegenden Erfindung insbesondere in der Bereitstellung eines entsprechend qualitativ hochwertigen, gut wirksamen Rheologiesteuerungsmittels mit verbesserter Lagerstabilität.

Die Aufgabe wurde gelöst durch die Bereitstellung einer Harnstoffzubereitung enthaltend,
(A)5 bis 75 Gew.-%, vorzugsweise 10 bis 65 Gew.-%, besonders bevorzugt 15 bis 60 Gew.-%, ganz besonders bevorzugt 20 bis 55 Gew.-% einer oder mehrerer Harnstoffkomponenten, die ein Molekulargewicht von ≥ 350 g/mol aufweisen sowie mindestens eine Harnstoffgruppe enthalten,
(B) 15 bis 95 Gew.-%, vorzugsweise 20 bis 85 Gew.-%, besonders bevorzugt 30 bis 80 Gew.-% eines oder mehrerer organischer Lösemittel aus der Gruppe der N-Alkylamide, die ein Molekulargewicht von 155 bis 700 g/mol besitzen, frei von Harnstoffgruppen sind und folgende allgemeine Formel (I) besitzen, 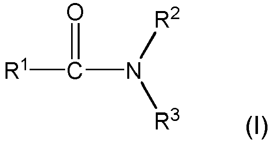 worin
   (a) R¹ ein x = 1 bis 24 Kohlenstoffatome enthaltender Kohlenwasserstoff-Rest,
      R² ein y = 1 bis 12 Kohlenstoffatome aufweisender organischer Rest, und
      R³ ein z = 1 bis 12 Kohlenstoffatome aufweisender organischer Rest ist,
      oder
   (b) R¹, R² und R³ wie unter (a) definiert sind, aber R¹ und R² durch eine chemische Bindung miteinander verbunden sind und gemeinsam unter Einbezug der Gruppe C(=O)N einen Ring mit 4 bis 10 Ringatomen ausbilden und im Falle eines Rings mit 4 oder 5 Ringatomen, bei welchen x+y < 4 ist, der R³ mindestens 6 Kohlenstoffatome und höchstens 11 Kohlenstoffatome enthält
      oder
   (c) R¹, R² und R³ wie unter (a) definiert sind, aber R² und R³ durch eine chemische Bindung miteinander verbunden sind und gemeinsam unter Einbezug des Stickstoffatoms der allgemeinen Formel (I) einen Ring mit 4 bis 10 Ringatomen ausbilden,
   mit der Maßgabe, dass für (a), (b) und (c) jeweils x+y+z ≥ 8 gilt,
(C) 0 bis 35 Gew.-%, vorzugsweise 0 bis 25 Gew.-% eines oder mehrerer von (B) verschiedener organischer Lösemittel, die keine Harnstoffgruppe sowie keine ionische Gruppe enthalten sowie maximal zwei Heteroatome ausgewählt aus der Gruppe bestehend aus Stickstoff und Sauerstoff, aufweisen, und
(D) 0 bis 50 Gew.-%, vorzugsweise 0 bis 15 Gew.-% eines Salzes, das sich von der oder den Harnstoffkomponenten (A), dem oder den Lösemitteln (B) sowie dem oder den Lösemitteln (C) unterscheidet, und
wobei sich alle gewichtsprozentualen Angaben auf das Gesamtgewicht der Harnstoffzubereitung beziehen.

Alle vorgenannten Komponenten (A), (B), (C) und (D) sowie die im Folgenden genannte Komponente (E) können eine oder mehrere unter die jeweilige Definition der jeweiligen Komponente fallende Spezies enthalten. Alle prozentualen Grenzen für die Komponenten gelten sowohl für den Fall, dass die Komponente jeweils nur aus einer Spezies besteht als auch für den Fall dass mehrere Spezies die jeweilige Komponente bilden, wobei dann die Summe der Gewichtsanteile der einzelnen Spezies in den prozentualen Grenzen liegen muss.

Für den Fall, dass eine oder mehrere der Komponenten auf eine spezielle Spezies oder auf eine Gruppe spezieller Spezies beschränkt werden, so dürfen die von dieser Komponente nunmehr ausgeschlossenen Spezies zwar noch in der erfindungsgemäßen Harnstoffzubereitung enthalten sein, nicht jedoch in einer Menge, die in Summe mit den in der jeweiligen Komponente verbliebenen Spezies die ursprünglichen prozentualen Grenzen der Komponente überschreitet.

Werden beispielsweise in einer besonderen Ausführungsform der Erfindung von der Harnstoffkomponente (A) solche Spezies ausgeschlossen, die ein gewichtsmittleres Molekulargewicht von 60000 g/mol oder mehr besitzen, so gilt für die weiterhin als Harnstoffkomponente (A) bezeichneten Spezies mit einem Molekulargewicht von ≥ 350 g/mol und gleichzeitig einem gewichtsmittleren Molekulargewicht von weniger als 60000 g/mol, dass diese in einer Menge von 5 bis 75 Gew.-% bezogen auf das Gesamtgewicht der Harnstoffzubereitung enthalten sein dürfen. Sind die verbliebenen Spezies jedoch nur in einem Anteil von 65 Gew.-% enthalten, so dürfen maximal 10 Gew.-%, bezogen auf das Gesamtgewicht der Harnstoffzubereitung an den von der eingeschränkten Definition der Harnstoffkomponente (A) ausgeschlossenen Harnstoffspezies mit einem gewichtsmittleren Molekulargewicht von 60000 g/mol oder mehr enthalten sein.

Solche Spezies, die ursprünglich einer der Komponenten (A), (B), (C) oder (D) zurechenbar waren, jedoch durch Spezifizierung der jeweiligen Komponente nicht mehr unter deren Definition fallen, werden dann als Spezies der Komponente (E), wie unten definiert, aufgefasst. Sie unterliegen dann zwingend hinsichtlich ihrer prozentualen Anteile, zusammen mit den in der Komponente, aus der sie ausgeschlossen wurden, verbliebenen Spezies, den ursprünglichen prozentualen Grenzen der jeweiligen Komponente, wie im vorangegangen Absatz exemplifiziert. Sie unterliegen vorzugsweise aber auch zusätzlich den vorzugsweise für die Komponente (E) angegebenen Grenzen des Maximalanteils an Komponente (E).

### Harnstoffkomponenten (A)

Das Molekulargewicht der anspruchsgemäßen Harnstoffkomponenten (A) ist im niedermolekularen Bereich dadurch beschränkt, dass Harnstoffkomponenten (A) mit Molmassen von weniger als 350 g/mol in der Regel rheologisch weniger wirksam oder gar rheologisch unwirksam sind. Bei solchen wenig oder unwirksamen Substanzen mit Molekulargewichten unterhalb 350 g/mol handelt es sich üblicherweise um konkrete monomere oder niedermolekulare oligomere Verbindungen mit definiertem Molekulargewicht, so dass sich die Angabe eines gewichts- oder zahlenmittleren Molekulargewicht erübrigt, da diese Verbindungen in der Regel keine molekulare Uneinheitlichkeit aufweisen. Die anspruchsgemäß gewählte Untergrenze von 350 g/mol stellt somit das tatsächliche Molekulargewicht der Spezies dar und ist beispielweise mittels NMR ermittelbar. Der Begriff "Harnstoffkomponente" schließt somit sowohl chemische Verbindungen im Sinne von Reinstoffen mit exakt definiertem Molekulargewicht, als auch oligomere oder polymere Komponenten, das heißt polydisperse Komponenten mit ein. Ist die Rede von verschiedenen Harnstoffkomponenten, so ist damit gemeint, dass sich diese - beispielsweise bei Oligomeren oder Polymeren - nicht nur in ihrer Kettenlänge beziehungsweise dem Molekulargewicht unterscheiden, sondern auch hinsichtlich der eingesetzten chemischen Grundbausteine in Art und/oder Menge.

Die Obergrenze des Molekulargewichts der Harnstoffkomponenten (A) ist hingegen unkritisch, solange noch eine Verträglichkeit der Harnstoffkomponenten (A) mit den weiteren Bestandteilen des Rheologiesteuerungsmittels und der späteren Zubereitung, in welcher die Harnstoffkomponenten (A) eingesetzt werden, gegeben ist. Die typischen Verträglichkeitsgrenzen werden üblicherweise von polymeren Harnstoffkomponenten (A) erreicht, für die nur gemittelte Molekulargewichte angegeben werden können. Üblicherweise geeignet sind als Harnstoffkomponenten (A) solche, die ein gewichtsmittleres Molekulargewicht von weniger als 60000 g/mol besitzen, wobei im Einzelfall aber auch Harnstoffkomponenten eingesetzt werden können, die ein höheres Molekulargewicht aufweisen, wie beispielsweise 80000 oder 100000 g/mol, solange die Verträglichkeit in den entsprechenden Systemen gewährleistet ist. Der Durchschnittsfachmann ist bei mangelnder Verträglichkeit ohne Weiteres in der Lage auf Harnstoffkomponenten (A) zurückzugreifen, die ein niedrigeres gewichtsmittleres Molekulargewicht aufweisen.

Dem Durchschnittsfachmann ist bekannt, dass für höhere Molekulargewichtsbereiche anstelle der NMR-Spektrokopie zur Bestimmung der Molekulargewichte anderen Verfahren der Vorzug zugeben ist. Die Bestimmung des gewichtsmittleren Molekulargewichts der Harnstoffkomponenten (A), die eine molare Masse von mehr als 1000 g/mol aufweisen, erfolgt, entsprechend der nachstehenden Beschreibung, als das Gewichtsmittel der mittels Gelpermeationschromatographie (GPC) bestimmten Molmassenverteilung. Die GPC-Molmassenverteilung wird gemäß DIN 55672 Teil 2 vom Januar 2008 bestimmt. Als Eluent wird eine Lösung von Lithiumbromid (Gehalt 5 g/l) in Dimethylacetamid verwendet. Zur Kalibrierung werden eng verteilte, linear aufgebaute Polymethylmethacrylat-Standards mit Molekulargewichten zwischen 1000000 und 102 g/mol verwendet. Die Temperatur des gesamten GPC-Systems (Injektor, Probenteller, Detektoren und Säulen) beträgt 80°C. Die gewichtsmittleren Molmassen der Harnstoffkomponenten (A) mit 350 g/mol bis zu etwa 1000 g/mol lassen sich beispielsweise mittels NMR ermitteln, indem die Integrale betreffender NMR-Resonanzsignale ins Verhältnis gesetzt werden. Die Wahl des Bestimmungsverfahren in diesem Bereich ist indes unkritisch, da anspruchsgemäß lediglich gewährleistet sein sollte, dass die Harnstoffkomponenten (A) - wie oben erklärt - ein Molekulargewicht von wenigstens 350 g/mol aufweisen.

In einer besonders bevorzugten Ausführungsform der Erfindung weisen 70 bis 100 Gew.-% der Harnstoffkomponente (A), bezogen auf das Gesamtgewicht der Harnstoffkomponenten (A), entweder mindestens zwei Harnstoffgruppen oder mindestens eine Harnstoffgruppe und mindestens eine Urethangruppen auf.

Ganz besonders bevorzugt handelt es sich bei den Harnstoffkomponenten (A) um Harnstoffurethane. Unter den Harnstoffurethanen sind besonders solche bevorzugt, die mindestens zwei Harnstoffgruppen und mindestens zwei Urethangruppen tragen. Insbesondere sind solche bevorzugt, die im Mittel zwei Harnstoffgruppen und zwei Urethangruppen tragen.

Häufig liegen 50 bis 100 Gew.-% der Harnstoffkomponente (A), bezogen auf das Gesamtgewicht der Harnstoffkomponenten (A), gemäß der allgemeinen Formel (II)

R³¹-[R³³-Z-R³⁴-W-]ₙR³² (II)

vor, worin
R³¹ und R³² jeweils gleich oder verschieden sind sowie jeweils unabhängig voneinander für einen verzweigten oder unverzweigten, gesättigten oder ungesättigten 1 bis 100, vorzugsweise 10 bis 90, besonders bevorzugt 20 bis 80 Kohlenstoffatome enthaltenden organischen Rest stehen, der maximal jeweils eine Harnstoffgruppe und maximal jeweils eine Urethangruppe aufweist,
R³³ und R³⁴ jeweils gleich oder verschieden sind sowie jeweils unabhängig voneinander für 1 bis 300, vorzugsweise 5 bis 200, besonders bevorzugt 6 bis 150 Kohlenstoffatome enthaltende, optional Ethergruppen enthaltende verzweigte oder unverzweigte Polyesterreste, für 2 bis 300, vorzugsweise 3 bis 150, besonders bevorzugt 4 bis 100 Kohlenstoffatome enthaltende verzweigte oder unverzweigte Polyetherreste, für 1 bis 300, vorzugsweise 5 bis 200, besonders bevorzugt 6 bis 150 Kohlenstoffatome enthaltende verzweigte oder unverzweigte Polyamidreste, für 3 bis 100, vorzugsweise 6 bis 60, besonders bevorzugt 9 bis 39 Siliziumatome enthaltende Polysiloxanreste, für verzweigte oder unverzweigte C₂-C₂₂-Alkylenreste, verzweigte oder unverzweigte C₃-C₁₈-Alkenylenreste, C₅-C₁₂-Arylenreste und/oder verzweigte oder unverzweigte C₇-C₂₂ Arylalkylenreste stehen,
Z und W jeweils gleich oder verschieden sind sowie jeweils unabhängig voneinander für NH-CO-O und/oder NH-CO-NH stehen, und
n für eine ganze Zahl von 1 bis 150, bevorzugt von 2 bis 120, besonders bevorzugt 4 bis 50 steht.

In einer speziellen Ausführungsform der Erfindung weisen 50 bis 100 Gew.-% der Harnstoffkomponente (A), bezogen auf das Gesamtgewicht der Harnstoffkomponenten (A), jeweils ein gewichtsmittleres Molekulargewicht von 2000 bis 60000 g/mol, vorzugsweise 3000 bis 30000 g/mol, besonders bevorzugt 4000 bis 20000 g/mol auf und enthalten 4 bis 150, vorzugsweise 5 bis 65 und besonders bevorzugt 6 bis 35 Harnstoffgruppen.

In einer typischen Ausführungsform der Erfindung liegen 50 bis 100 Gew.-% der Harnstoffkomponente (A), bezogen auf das Gesamtgewicht der Harnstoffkomponenten (A), jeweils gemäß einer oder mehrerer der allgemeinen Formeln ausgewählt aus der Gruppe bestehend aus (IIIa), (IIIb), (IIIc) und (IIId) 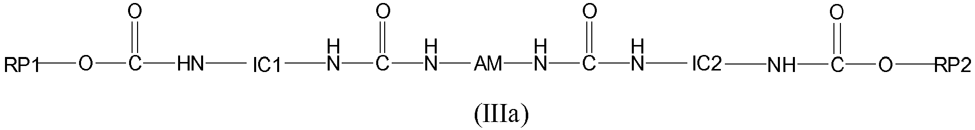 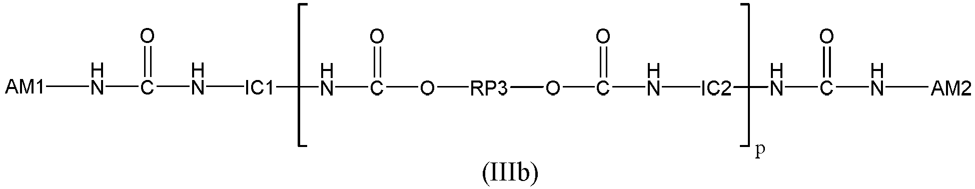 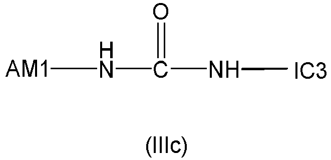 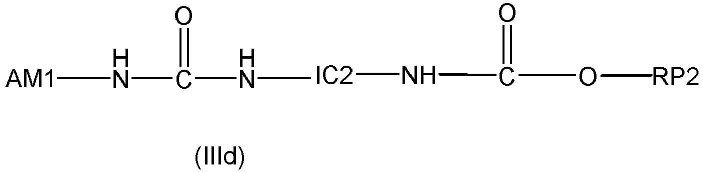 vor, worin
AM für einen linearen oder verzweigten, gesättigten oder ungesättigten, aliphatischen, aromatischen oder aliphatisch-aromatischen organischen Rest mit 2 bis 50, vorzugsweise 2 bis 20, besonders bevorzugt 4 bis 14, ganz besonders bevorzugt 6 bis 10 Kohlenstoffatomen steht,
AM1 sowie AM2 jeweils gleich oder verschieden sind sowie jeweils unabhängig voneinander für einen linearen oder verzweigten, gesättigten oder ungesättigten, aliphatischen, aromatischen oder aliphatisch-aromatischen organischen Rest mit 1 bis 50, vorzugsweise 2 bis 24, besonders bevorzugt 3 bis 18, ganz besonders bevorzugt 4 bis 12 Kohlenstoffatomen stehen, wobei dieser organische Rest auch weitere funktionelle Gruppen wie Hydroxylgruppen, Ethergruppen oder Aminogruppen aufweisen kann,
IC1 sowie IC2 jeweils gleich oder verschieden sind sowie jeweils unabhängig voneinander für einen linearen oder verzweigten, gesättigten oder ungesättigten, aliphatischen, aromatischen oder aliphatisch-aromatischen Kohlenwasserstoffrest mit 2 bis 40, vorzugsweise 4 bis 20, besonders bevorzugt 5 bis 18, ganz besonders bevorzugt 6 bis 13 Kohlenstoffatomen stehen,
IC3 für einen linearen oder verzweigten, gesättigten oder ungesättigten, aliphatischen, aromatischen oder aliphatisch-aromatischen Kohlenwasserstoffrest mit 1 bis 24, vorzugsweise 2 bis 20, besonders bevorzugt 6 bis 18 Kohlenstoffatomen steht,
RP1 sowie RP2 jeweils gleich oder verschieden sind sowie jeweils unabhängig voneinander für einen linearen oder verzweigten, gesättigten oder ungesättigten, aliphatischen, aromatischen oder aliphatisch-aromatischen organischen Rest mit 1 bis 24, vorzugsweise 2 bis 20, besonders bevorzugt 4 bis 18 Kohlenstoffatomen, ganz besonders bevorzugt 8 bis 14 und/oder für einen Polyetherrest mit 1 bis 120, vorzugsweise 1 bis 50, besonders bevorzugt 2 bis 20, ganz besonders bevorzugt 3 bis 15 Ethersauerstoffatomen und/oder für einen optional Ethergruppen enthaltenden Polyesterrest mit 1 bis 100, vorzugsweise 1 bis 50, besonders bevorzugt 2 bis 20 Estergruppen und/oder für einen Polyamidrest mit 1 bis 100, vorzugsweise 1 bis 50, besonders bevorzugt 2 bis 20 Amidgruppen und/oder für einen Polysiloxanrest mit 3 bis 100, vorzugsweise 3 bis 60, besonders bevorzugt 6 bis 39 Siliziumatomen stehen,
RP3 gleich oder verschieden sind sowie für einen linearen oder verzweigten, gesättigten oder ungesättigten, aliphatischen, aromatischen oder aliphatisch-aromatischen Kohlenwasserstoffrest mit 1 bis 24, vorzugsweise 2 bis 18, besonders bevorzugt 2 bis 14 Kohlenstoffatomen und/oder für einen (Poly)etherrest mit 1 bis 120, vorzugsweise 1 bis 25, besonders bevorzugt 2 bis 20, ganz besonders bevorzugt 2 bis 15 Ethersauerstoffatomen und/oder für einen Polyamidrest mit 1 bis 100, vorzugsweise 1 bis 30, besonders bevorzugt 2 bis 20 Amidgruppen und/oder für einen Polysiloxanrest mit 3 bis 100, vorzugsweise 3 bis 60, besonders bevorzugt 6 bis 30 Siliziumatomen und/oder für einen optional Ethergruppen enthaltender Polyesterrest mit 1 bis 100, vorzugsweise 1 bis 25, besonders bevorzugt 2 bis 20, ganz besonders bevorzugt 2 bis 15 Estergruppen steht und
p für 0 oder 1 steht.

In einem solchen Fall liegen vorzugsweise 70 bis 100 Gew.-% der Harnstoffkomponente (A), bezogen auf das Gesamtgewicht der Harnstoffkomponenten (A), gemäß einer oder mehrerer der allgemeinen Formeln ausgewählt aus der Gruppe bestehend aus (IIIa), (IIIb), (IIIc) und (IIId) vor, wobei

AM ausgewählt ist aus der Gruppe bestehend aus 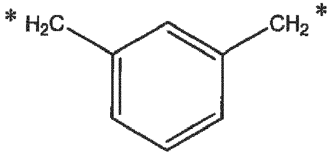 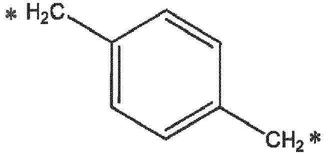 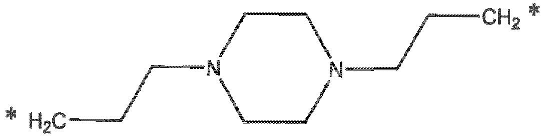 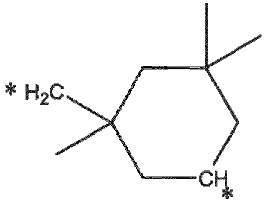 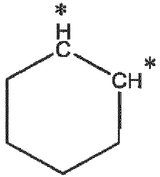 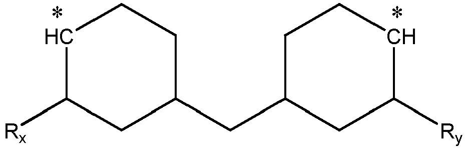 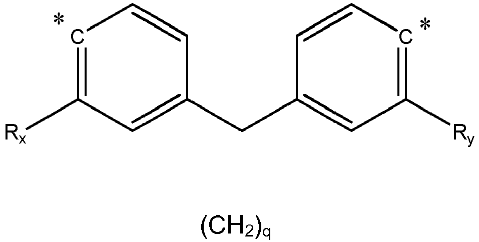 worin Rₓ und R_{y} gleich oder verschieden sind sowie jeweils unabhängig für CH₃ und/oder Wasserstoff, und
q gleich oder verschieden für eine ganze Zahl von 2 bis 12, bevorzugt von 2 bis 8, besonders bevorzugt von 2 bis 6 steht,
AM1 und AM2 jeweils gleich oder verschieden sind sowie ausgewählt sind aus der Gruppe bestehend aus n-Propyl, Isopropyl, Butyl, Isobutyl, tert-Butyl, Lauryl, Oleyl, Stearyl, Polyisobutylen und Polyether-Resten mit 2 bis 40, vorzugsweise 2 bis 20, besonders bevorzugt 3 bis 15 Ethersauerstoffatomen, Benzyl, Methylbenzyl, Cyclohexyl, Carboxyalkyl, Hydroxyalkyl und Alkylalkoxysilan,
IC1 und IC2 jeweils gleich oder verschieden sind sowie ausgewählt sind aus der Gruppe bestehend aus 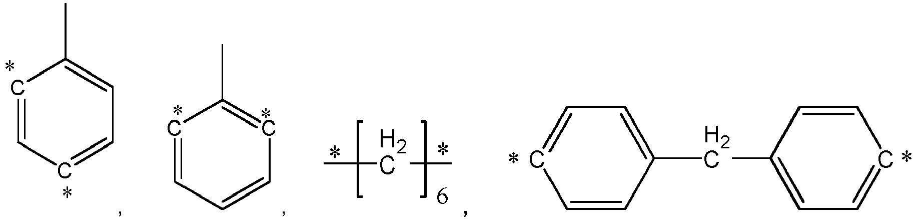 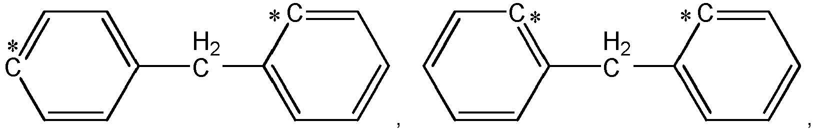 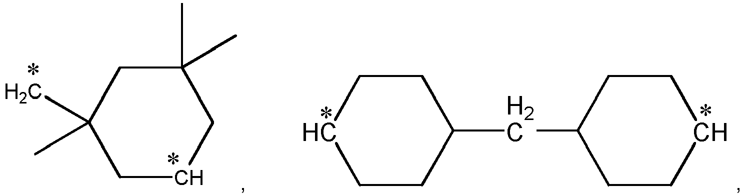 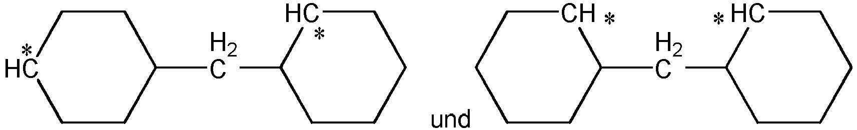 IC3 ausgewählt ist aus der Gruppe bestehend aus Methyl, Ethyl, Phenyl, Benzyl, Cyclohexyl und Stearyl,
RP1 und RP2 jeweils gleich oder verschieden sind sowie ausgewählt sind aus der Gruppe bestehend aus verzweigten oder unverzweigten C₁- bis C₁₈-Alkyl-Resten, einem Oleyl-, Benzyl- oder Allyl-Rest, bevorzugt Struktureinheiten von Ethylenoxid, Propylenoxid und/oder Butylenoxid enthaltenden Polyetherresten und Struktureinheiten von epsilon-Caprolacton und/oder delta-Valerolacton enthaltenden Polyesterresten,
RP3 gleich oder verschieden ist sowie ausgewählt ist aus der Gruppe bestehend aus linearen oder verzweigten C₁- bis C₁₈-Alkylen-Resten, linearen oder verzweigten C₂- bis C₁₈-Alkenylen-Resten und bevorzugt Struktureinheiten von Ethylenoxid, Propylenoxid und/oder Butylenoxid enthaltenden Polyether-Resten mit 1 bis 25, vorzugsweise 2 bis 20, besonders bevorzugt 2 bis 15 Ethersauerstoffatomen.

In einer speziellen Ausführungsform sind 70 bis 100 Gew.-% der Harnstoffkomponente (A), bezogen auf das Gesamtgewicht der Harnstoffkomponenten (A), jeweils durch Umsetzung von durch Isocyanurat- und/oder Uretdionbildung oligomerisierten Isocyanaten mit monofunktionellen Aminen herstellbar.

In einer besonderen Ausführungsform der Erfindung enthält 95 bis 100 Gew.-%, bevorzugt 98 bis 100 Gew.-% der Harnstoffkomponente (A), bezogen auf das Gesamtgewicht der Harnstoffkomponenten (A), jeweils mindestens
ein Molekülsegment der allgemeinen Formel (IVa)

-O-CO-NH-Y₁-NH-CO-NH- (IVa)

worin
Y₁ für einen 4 bis 20, vorzugsweise 5 bis 18, besonders bevorzugt 6 bis 13, ganz besonders bevorzugt 6 bis 7 Kohlenstoffatome enthaltenden gesättigten oder ungesättigten, verzweigten oder unverzweigten Kohlenwasserstoffrest steht,
und jeweils kein Molekülsegment der allgemeinen Formel (IVb)

-O-CO-NH-Y₂-NH-CO-O- (IVb)

worin
Y₂ für einen 4 bis 20, vorzugsweise 5 bis 18, besonders bevorzugt 6 bis 13, ganz besonders bevorzugt 6 bis 7 Kohlenstoffatome enthaltenden gesättigten oder ungesättigten, verzweigten oder unverzweigten Kohlenwasserstoffrest steht.

Die Herstellung der Harnstoffkomponenten (A) kann in bekannter Weise durch Umsetzung entsprechender Isocyanate mit Aminen erfolgen. Herstellverfahren für solche Harnstoffkomponenten werden beispielsweise näher beschrieben in EP 0006252, DE 2822908, DE 10241853, DE 19919482, EP 1188779 und DE 102008059702. Die Herstellung insbesondere höhermolekularer Harnstoffkomponenten wird beispielsweise in EP 2292675 offenbart. Bevorzugt findet die Herstellung der Harnstoffkomponente (B) auch gemäß dieser Herstellverfahren statt. Bevorzugte erfindungsgemäße Harnstoffzubereitungen zur Rheologiesteuerung sind daher auch solche, bei denen die Harnstoffkomponente (B) gemäß einem solchen Herstellverfahren erhalten wurde.

### Organisches Lösemittel (B)

Der Rest R¹ in der oben angegebenen allgemeinen Formel (I) kann beim Einsatz mehrerer verschiedener Verbindungen (B) für alle Verbindungen gleich oder verschieden sein. R¹ kann verzweigt oder unverzweigt, gesättigt oder ungesättigt sein.

R¹ enthält besonders bevorzugt 1 bis 20, ganz besonders bevorzugt 1 bis 16, speziell bevorzugt 2 bis 12 Kohlenstoffatome.

Die Reste R² und R³ können innerhalb einer Verbindung der allgemeinen Formel (I) unabhängig voneinander jeweils gleich oder verschieden sein. Sie können jeweils unabhängig voneinander verzweigt oder unverzweigt, gesättigt oder ungesättigt sein.

Besonders bevorzugt enthalten die organischen Reste R² und R³ unabhängig voneinander 1 bis 11, besonders bevorzugt 1 bis 10 Kohlenstoffatome. Besonders bevorzugt handelt es sich bei den Resten R² und R³ unabhängig voneinander um heteroatomfreie Kohlenwasserstoffreste.

Sind die Reste R¹ und R² durch eine chemische Bindung miteinander verbunden und bilden sie mit der Gruppierung CO-N gemeinsam einen Ring, wie dies in folgender allgemeiner Formel (I') dargestellt wird, 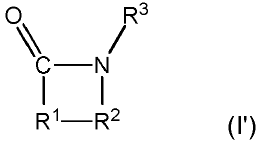 so enthält der Ring vorzugsweise 4 bis 8 und ganz besonders bevorzugt 5 bis 7 Ringatome. Vorzugsweise handelt es sich bei den Ringatomen des Restes R¹-R² um Kohlenstoffatome und gegebenenfalls maximal ein Sauerstoffatom, welches nicht direkt an die Gruppe O=C-NR³ gebunden ist. Besonders bevorzugt sind sämtliche Ringatome des Rests R¹-R² Kohlenstoffatome.

Sind die Reste R² und R³ durch eine chemische Verbindung miteinander verbunden und bilden diese mit dem Stickstoffatom der Amidgruppe gemeinsam einen Ring, wie dies in folgender allgemeiner Formel (I") dargestellt wird, 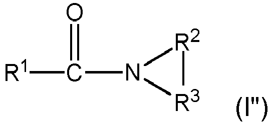 so enthält der Ring vorzugsweise 4 bis 8, besonders bevorzugt 5 bis 6 Ringatome. Vorzugsweise handelt es sich bei den Ringatomen des Restes R²-R³ um Kohlenstoffatome und gegebenenfalls maximal ein Sauerstoffatom, welches nicht direkt an das Ringstickstoffatom gebunden ist. Besonders bevorzugt sind sämtliche Ringatome des Rests R²-R³ Kohlenstoffatome.

Das Lösemittel (B) ist ein organisches Lösemittel, welches die beschriebene Harnstoffkomponente (A) bei einer Temperatur zwischen 5 und 80 °C, bevorzugt zwischen 15 und 60°C, besonders bevorzugt bei Raumtemperatur (23 °C) in flüssiger Form, das heißt als Harnstoff-Lösung, bereitstellen kann. Generell gilt, dass alle erfindungsgemäßen Harnstoffzubereitungen bei 23 °C bevorzugt in flüssiger oder pastöser Form, besonders bevorzugt in flüssiger Form vorliegen. Das Lösemittel (B) liegt üblicherweise bei 23 °C bevorzugt in flüssiger Form vor.

Das Lösemittel (B) lässt sich grundsätzlich in zwei Kategorien typisieren. Einerseits Lösemittel (B1), welche man als intermolekulare Amide auffassen kann, dargestellt durch die allgemeine Formel (I), wenn R¹ und R² keinen Ring bilden und durch Formel (I") und andererseits Lösemittel (B2) welche intramolekulare cyclische Amide, das heißt sogenannte Lactame darstellen, die durch die allgemeine Formel (I') wiedergegeben werden.

Unter den intermolekularen Amiden (B1) der Formel (I), bei welchen R¹ und R² keinen Ring bilden, sind N,N-Dialkylamide bevorzugt. Darunter bevorzugt sind N,N-Di-(C₁₋₈-Alkyl)amide, und insbesondere N,N-Di-(C₁₋₆-Alkyl)amide und ganz besonders bevorzugt N,N-(Di-C₁₋₄-Alkyl)amide. Die Alkylgruppen können geradkettig oder verzweigt sein und sind vorzugsweise geradkettig. Als den N,N-Dialkylamiden zugrundeliegende Carbonsäuren sind C₁₋₂₄-Monocarbonsäuren, vorzugsweise C₁₋₂₀-Monocarbonsäuren, besonders bevorzugt C₁₋₁₆-Monocarbonsäuren und ganz besonders bevorzugt C₁₋₁₂-Monocarbonsäuren, wie beispielsweise C₁₋₁₀-Monocarbonsäuren geeignet. Die Monocarbonsäuren können geradkettig, verzweigt, und einfach oder mehrfach ungesättigt sein. Vorzugsweise sind die Monocarbonsäuren geradkettig und gesättigt.

Unter den intramolekularen Amiden (B2) der Formel (I') sind solche mit 4 bis 8, vorzugsweise 5 bis 7 Ringatomen bevorzugt. Zu den Ringatomen zählen keine eventuell enthaltenen Seitenketten. Beispielsweise stellen die Verbindungen folgender Formel (II)

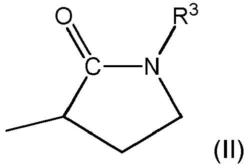

Verbindungen mit 5 Ringatomen dar, bei welchen die Reste R¹ und R² einen gemeinsamen zweiwertigen Rest CH(CH₃)-CH₂-CH₂ bilden, der 4 Kohlenstoffatome enthält.

Besonders bevorzugt als Verbindungen der Formel (I') sind solche, bei welchen das Ringsystem ein gamma-Butyrolactam, (d.h. Pyrrolidon), ein delta-Valerolactam oder epsilon-Caprolactam ist. Die Ringsysteme können einen oder mehrere Alkylgruppen als Substituenten an einem Ringkohlenstoffatom aufweisen, beispielsweise im gamma-Valerolactam. Bei den Alkylsubstituenten handelt es sich vorzugsweise um Methylgruppen. Vorzugsweise ist höchstens ein Substituent an einem Ringkohlenstoffatom vorhanden, insbesondere ein Methylsubstituent. Besonders bevorzugt sind die unsubstituierten Ringsysteme.

In den Verbindungen der Formel (I') sind als Reste R³ solche bevorzugt, die mindestens 6 Kohlenstoffatome enthalten. Bei den R³ kann es sich um aliphatische oder aromatische Reste oder eine Kombination beider - wie beispielsweise im Benzylrest oder im Propylimidazol-Rest - handeln. Die aliphatischen Reste können auch cycloaliphatisch sein. Die aromatischen Reste können auch Heteroatome enthalten. Besonders bevorzugte rein aliphatische Reste sind Alkylreste mit 6 bis 11 Kohlenstoffatomen, vorzugsweise Alkylreste mit 6 bis 10 Kohlenstoffatomen und ganz besonders bevorzugt Alkylreste mit 6 bis 8 Kohlenstoffatomen. Vorgenannte Alkylreste können geradkettig oder verzweigt sein und sind vorzugsweise geradkettig.

In einer besonderen Ausführungsform gilt für 50 bis 100 Gew.-% des Lösemittels (B) der allgemeinen Formel (I), bezogen auf das Gesamtgewicht des Lösemittels (B), dass es sich um ein intermolekulares Amid (B1) handelt, worin
R¹ ein 3 bis 17, vorzugsweise 5 bis 15, besonders bevorzugt 7 bis 13, ganz besonders bevorzugt 7 bis 12 Kohlenstoffatome enthaltender, verzweigter oder unverzweigter, gesättigter oder ungesättigter, vorzugsweise gesättigter Kohlenwasserstoff-Rest ist;
R² und R³ jeweils gleich oder verschieden sind und unabhängig voneinander für einen verzweigten oder unverzweigten, gesättigten oder ungesättigten, 1 bis 6, vorzugsweise 1 bis 4, ganz besonders bevorzugt 1 Kohlenstoffatome aufweisenden organischen Rest stehen,
   oder
R² und R³ durch eine chemische Bindung miteinander verbunden sind und unter Einbezug des Stickstoffatoms der allgemeinen Formel (I) einen Ring mit 5 bis 7 Ringatomen ausbilden.

Vorzugsweise handelt es sich beim Rest R¹ um einen verzweigten oder unverzweigten Alkylrest, besonders bevorzugt enthält dieser 7 bis 12, ganz besonders bevorzugt 7 bis 11 Kohlenstoffatome.

In einer besonders bevorzugten Ausführungsform steht R¹ für einen verzweigten oder unverzweigten, 7 bis 11 Kohlenstoffatome enthaltenden Alkylrest, und R² und R³ stehen jeweils für einen Methyl-Rest.

Die Herstellung der jeweiligen als Lösemittel (B1) einsetzbaren Alkylamidverbindungen erfolgt je nach Strukturtyp anhand bekannter organisch-chemischer Methoden. So kann die Herstellung der oben beschriebenen Strukturtypen durch Umsetzung einer entsprechenden Carbonsäure, bevorzugt Alkylcarbonsäure, mit einem entsprechenden Amin erfolgen; anstelle der Carbonsäure können auch deren reaktive Derivate, insbesondere die Anhydride, Ester und Säurehalogenide der Carbonsäuren, vorzugsweise der Alkylcarbonsäuren mit dem Amin umgesetzt werden. So wird die Herstellung von Verbindungen dieses Typs beispielsweise in US 3417114 A, US 2667511 A, GB 719792 A, DE 875807, US 3288794 A, US 3751465 A, US 3674851 A, US 3856791 A, WO 2006033117 A2 sowie in Synthetic Communications 2000, 30, 4241 beschrieben.

In einer weiteren besonderen Ausführungsform gilt für 50 bis 100 Gew.-% des Lösemittels (B) der allgemeinen Formel (I), bezogen auf das Gesamtgewicht des Lösemittels (B), dass es sich um ein intramolekulares Amid (B2) handelt, worin
R¹ und R² durch eine chemische Bindung miteinander verbunden sind und unter Einbezug der Gruppe C(=O)N einen Ring mit 4 bis 8, vorzugsweise 5 bis 7, besonders bevorzugt 5 oder 6, ganz besonders bevorzugt 5 Ringatomen ausbilden, wobei gegebenenfalls ein oder mehrere Ringkohlenstoffatome mit einem C₁-C₄-Alkylrest substituiert sind,
mit der Maßgabe, dass x+y+z ≥ 8, vorzugsweise ≥ 9, besonders bevorzugt ≥ 11 ist und R³ mindestens 6 Kohlenstoffatome enthält.

Die Herstellung der jeweiligen als Lösemittel (B2) einsetzbaren Lactame erfolgt je nach Strukturtyp anhand bekannter organisch-chemischer Methoden. In einem bevorzugten Herstellverfahren werden obige Verbindungen durch Umsetzung von Alkyl-, Aryl- oder Arylalkylaminen mit entsprechenden Lactonen hergestellt. So wird die Herstellung solcher Verbindungen z.B. auch beschrieben in US 4299840 A, WO 1993017787 A1, US 5508396 A, US 5986092 A, US 5101045 A, US 3767644 A, US 4814464 A, WO 1993016042 A1 sowie in Tetrahedron Letters 1994, 35, 3313 und in Macromol. Chem. Phys. 1996, 197, 3123, in Drug Design and Discovery 1991, 8, 37 und in Studies in Surface Science and Catalysis 1997, 108, 115-122 sowie in M. B. Smith, Houben-Weyl: Methods of Molecular Transformations, Category 3, Volume 21, Product Class 10: "gamma-Lactames and Larger Ring Lactames" (G. Thieme Verlag, Stuttgart/New York 2005, Volume Editor S. M. Weinreb). Lactame lassen sich auch aus ω-N-Monoalkylaminocarbonsäuren durch Ringschluss unter Abspaltung von Wasser herstellen. Aus offenkettigen Amiden mit mindestens je einer Kohlenstoff-Kohlenstoff-Doppelbindung an beiden Enden des Moleküls kann man durch Ringschluss-Metathese ebenfalls Lactame synthetisieren.

### Organisches Lösemittel (C)

Die Anwesenheit eines weiteren, von (A), (B) und (D) verschiedenen Lösemittels (C) kann vorteilhaft sein. Es kann jedoch auch auf das Lösemittel (C) verzichtet werden; dies bedeutet, dass in einer besonders bevorzugten Ausführungsform der erfindungsgemäßen Harnstoffzubereitungen (C) nicht enthalten ist. Vorzugsweise enthalten die erfindungsgemäßen Harnstoffzubereitungen weniger als 35 Gew.-%, noch bevorzugter weniger als 25 Gew.-%, insbesondere bevorzugt weniger als 10 Gew.-% und ganz besonders bevorzugt weniger als 5 Gew.-% an Lösemittel (C), bezogen auf das Gesamtgewicht der Harnstoffzubereitungen. Ist das Lösemittel (C) enthalten, so beträgt dessen Anteil vorzugsweise 1 bis 35 Gew.-%, besonders bevorzugt 1 bis 25 Gew.-%, ganz besonders bevorzugt 1 bis 10 Gew.-% bezogen auf das Gesamtgewicht der erfindungsgemäßen Harnstoffzubereitung. Es kommen alle aus dem Stand der Technik bekannten organischen Lösemittel (C) infrage, die sich chemisch inert gegenüber den weiteren Bestandteilen der erfindungsgemäßen Harnstoffzubereitung verhalten. Das organische Lösemittel (C) kann insbesondere im Hinblick auf den späteren Anwendungsbereich der Harnstoffzubereitung gewählt werden. Bei der Wahl eines entsprechenden Lösemittels (C) können somit Aspekte wie die Evaporationstemperatur unter den späteren Anwendungsbedingungen oder die chemische und/oder physikalische Verträglichkeit mit den Anwendungssystemen eine Rolle spielen. So ist es üblicherweise nicht erwünscht, dass die Lösemittel (C) chemisch gegenüber den Anwendungssystemen, in welche die Harnstoffzubereitungen einzuarbeiten sind, reaktiv sind oder zu deren Koagulation führen. Wie auch die Lösemittel (B) sind die Lösemittel (C) üblicherweise bei 23 °C flüssig. Werden Lösemittel (C) eingesetzt, so ist es bevorzugt, dass maximal drei, besonders bevorzugt maximal zwei voneinander verschiedene Lösemittel (C) eingesetzt werden. Ganz besonders bevorzugt wird nur ein Lösemittel (C) eingesetzt.

Vorzugsweise ist die Harnstoffzubereitung frei von Lösemitteln (C).

Die oben genannten prozentualen Grenzen für den Einsatz eines Lösemittels (C) gelten unabhängig von der Zahl der eingesetzten voneinander verschiedenen Lösemittel (C).

Vorzugsweise werden die Lösemittel (C) gewählt aus der Gruppe bestehend aus aliphatischen Kohlenwasserstoffen, cycloaliphatischen Kohlenwasserstoffen, Terpenen, Terpenoiden, aromatischen Kohlenwasserstoffen, Chlorkohlenwasserstoffen, Alkoholen, Ketonen, Estern, Glykolethern, Ethern, Amiden, Sulfoxiden, Sulfonen, Acetalen und Nitroalkanen. Beispiele geeigneter Lösemittel, die unter die vorgenannten Oberbegriffe fallen sind bei Kittel, Lehrbuch der Lacke und Beschichtungen, Band 4 "Lösemittel, Weichmacher und Additive", Zweite Auflage, S. Hirzel Verlag Stuttgart, 2007, insbesondere in der Tabelle 4.1.23 auf Seiten 81-85 genannt.

Vorzugsweise besitzen die Lösemittel (C) Molmassen von 32 bis 300 g/mol, vorzugsweise bis etwa 250 g/mol, besonders bevorzugt von 32 bis etwa 200 g/mol. Ganz besonders bevorzugt handelt es sich bei den Lösemitteln um monomere Verbindungen.

### Salze (D)

In einer Ausführungsform der Erfindung enthält die erfindungsgemäße Komposition 0,5 bis 4 Gew.-% eines Salzes (D), wobei 50 bis 100 Gew.-%, vorzugsweise 100 Gew.-% des Salzes (D) ein Alkali- oder Erdalkalimetallsalz oder ein Ammoniumsalz, bevorzugt ein Lithium-, Calcium- oder Magnesiumsalz, besonders bevorzugt ein Lithium- oder Calciumsalz ist, welches als Anion bevorzugt ein einwertiges Anion, insbesondere bevorzugt ein Halogenid, Pseudohalogenid, Formiat, Acetat und/ oder Nitrat, ganz besonders bevorzugt ein Chlorid, Acetat und/ oder Nitrat, als Gegenion besitzt. Besonders bevorzugt sind Lithiumsalze.

Zu den Salzen zählen auch sogenannte ionische Flüssigkeiten. Unter ionischen Flüssigkeiten werden im Rahmen der vorliegenden Erfindung organische Salze oder Gemische aus organischen Salzen verstanden, deren Schmelzpunkte unterhalb 80 °C liegen, vorzugsweise liegen deren Schmelzpunkte unter 50 °C, besonders bevorzugt unter 30 °C und ganz besonders bevorzugt unter 20 °C. Die hierin besonders bevorzugten ionischen Flüssigkeiten sind bei Raumtemperatur flüssig. Ganz besonders bevorzugt als Salze (D) einsetzbare ionische Flüssigkeiten sind beispielsweise die in WO 2010/063358 A1 beschriebenen ionischen Flüssigkeiten.

Enthält die Zusammensetzung als Salz (D) eine ionische Flüssigkeit, so ist diese vorzugsweise in einer Menge von 5 bis 50 Gew.-% enthalten.

### Komponente (E)

Neben den oben genannten Komponenten (A), (B), (C) und (D) können eine oder mehrere, von diesen Komponenten verschiedene Komponenten (E) enthalten sein. Generell gilt, dass alle nicht unter die Definitionen von (A), (B), (C) und (D) fallenden Komponenten als Komponente (E) angesehen werden können.

Hierbei kann es sich beispielsweise um weitere monomere, oligomere oder polymere Substanzen (E) handeln.

Vorzugsweise sind 0 bis maximal 20 Gew.-%, besonders bevorzugt 0 bis 10 Gew.-%, mehr bevorzugt 0 bis 5 Gew.-% und ganz besonders bevorzugt 0 bis 3 Gew.-% an Komponenten (E) bezogen auf das Gesamtgewicht der Harnstoffzubereitung enthalten. Vorzugsweise ist die Harnstoffzubereitung frei von Komponente (E).

In einer bevorzugten Ausführungsform besteht die erfindungsgemäße Harnstoffzubereitung, jeweils bezogen auf das Gesamtgewicht der Harnstoffzubereitung aus
i. 10 bis 65 Gew.% (A),
ii. 20 bis 85 Gew.-% (B),
iii. 0 bis 35 Gew.-% (C),
iv. 0,5 bis 4 Gew.-% (D), wenn (D) für ein oder mehrere Alkali- oder Erdalkalimetallsalz oder ein Ammoniumsalz mit einwertigen Anion gewählt aus der Gruppe der Halogenide, Pseudohalogenide, Formiate, Acetate und/ oder Nitrate steht, oder
   5 bis 50 Gew.-% (D), wenn (D) für eine ionische Flüssigkeit steht,
v. 0 bis 20 Gew.-% (E).

In einer besonders bevorzugten Ausführungsform besteht die erfindungsgemäße Harnstoffzubereitung, jeweils bezogen auf das Gesamtgewicht der Harnstoffzubereitung aus
i. 15 bis 60 Gew.% (A),
ii. 30 bis 80 Gew.-% (B),
iii. 0 bis 25 Gew.-% (C),
iv. 0,5 bis 4 Gew.-% (D), wenn (D) für ein oder mehrere Alkali- oder Erdalkalimetallsalz oder ein Ammoniumsalz mit einwertigen Anion gewählt aus der Gruppe der Halogenide, Pseudohalogenide, Formiate, Acetate und/ oder Nitrate steht, oder
   5 bis 50 Gew.-% (D), wenn (D) für eine ionische Flüssigkeit steht,
v. 0 bis 10 Gew.-% (E).

In einer ganz besonders bevorzugten Ausführungsform besteht die erfindungsgemäße Harnstoffzubereitung, jeweils bezogen auf das Gesamtgewicht der Harnstoffzubereitung aus
i. 20 bis 55 Gew.% (A),
ii. 35 bis 75 Gew.-% (B),
iii. 0 bis 25 Gew.-% (C),
iv. 0,5 bis 4 Gew.-% (D), wenn (D) für ein oder mehrere Alkali- oder Erdalkalimetallsalz oder ein Ammoniumsalz mit einwertigen Anion gewählt aus der Gruppe der Halogenide, Pseudohalogenide, Formiate, Acetate und/ oder Nitrate steht, oder
   5 bis 50 Gew.-% (D), wenn (D) für eine ionische Flüssigkeit steht,
v. 0 bis 5 Gew.-% (E).

Für alle vorgenannten Ausführungsformen, insbesondere die bevorzugten, besonders bevorzugten und ganz besonders bevorzugten gilt, dass vorzugsweise Komponenten (C) oder (E), insbesondere (C) und (E) nicht enthalten sind.

Für alle vorgenannten Ausführungsformen, insbesondere die bevorzugten, besonders bevorzugten und ganz besonders bevorzugten gilt, dass vorzugsweise Komponenten (C) als Spezies ausschließlich organische Lösemittel mit einem Molekulargewicht von bis zu 300 g/mol enthält.

Für alle vorgenannten Ausführungsformen, insbesondere die bevorzugten, besonders bevorzugten und ganz besonders bevorzugten gilt, dass die in Komponenten (A) enthaltenen Harnstoffspezies vorzugsweise ein gewichtsmittleres Molekulargewicht, bestimmt mittels GPC, von weniger als 60000 g/mol, besonders bevorzugt von weniger als 40000 g/mol besitzen. Ganz besonders bevorzugt liegt das gewichtsmittlere Molekulargewicht bei weniger als 10000 g/mol.

Für alle vorgenannten Ausführungsformen, insbesondere die bevorzugten, besonders bevorzugten und ganz besonders bevorzugten gilt, dass die Komponente (E), sofern vorhanden und sofern sie hydroxylgruppenhaltige Spezies enthält, die Hydroxylzahl der Spezies vorzugsweise weniger als 15 mg KOH/g beträgt. Vorzugsweise ist dann maximal eine Hydroxylgruppe in der jeweiligen Spezies enthalten. Ganz besonders bevorzugt enthält die Komponente (E) keine Hydroxylgruppen enthaltenden Spezies.

Für alle vorgenannten Ausführungsformen, insbesondere die bevorzugten, besonders bevorzugten und ganz besonders bevorzugten gilt, dass die Komponente (E) vorzugsweise frei von sogenannten Vernetzungsmitteln ist. Vernetzungsmittel im Sinne dieser Erfindung sind insbesondere Polyisocyanate mit freien oder blockierten Isocyanatgruppen, Aminoharze, wie beispielsweise Melaminharze, Harnstoff-Formaldehyd-Harze und Benzoguanaminharze, Polyamine und Polyepoxide.

### Erfindungsgemäße Harnstoffzubereitungen

Die erfindungsgemäße Harnstoffzubereitung kann wie oben dargestellt neben den Bestandteilen (A), (B), (C) und (D) noch die vorgenannten weiteren Bestandteile (E) enthalten und besteht in einem solchen Fall vorzugsweise aus den Bestandteilen (A), (B), (C), (D) und (E), wobei (C), (D) und (E) fakultativ sind. Die erfindungsgemäße Harnstoffzubereitung kann somit auch aus den Bestandteilen (A), (B), (C) und (D) bestehen. Sie besteht in einer bevorzugten Ausführungsform aus (A), (B) und (C) oder insbesondere (A), (B) und (D), und in einer ganz besonders bevorzugten Ausführungsform aus (A) und (B). Die vorgenannten bevorzugten und besonders bevorzugten Kombinationen der Bestandteile sind unabhängig von der spezifischen Ausführung der einzelnen Komponenten.

Die erfindungsgemäßen Harnstoffzubereitungen enthalten vorzugsweise weder Pigmente noch Füllstoffe. Unabhängig davon enthalten die erfindungsgemäßen Harnstoffzubereitungen vorzugsweise weniger als 5 Gew.-%, besonders bevorzugt weniger als 3 Gew.-% und ganz besonders bevorzugt weniger als 1 Gew.-% an Wasser bezogen auf das Gesamtgewicht der Harnstoffzubereitung. Ganz besonders bevorzugt sind die Harnstoffzubereitungen im Wesentlichen wasserfrei.

Da die erfindungsgemäßen Harnstoffzubereitungen üblicherweise eine gute Lagerstabilität aufweisen sind die darin enthaltenen Bestandteile vorzugsweise einander gegenüber chemisch inert. Dies gilt insbesondere für die Komponenten (A), (B), (C), (D) und (E) untereinander.

Das Gesamtgewicht der Summe der zwingend in den erfindungsgemäßen Harnstoffzubereitungen enthaltenen Komponenten (A) und (B) beträgt mindestens 20 Gew.-%, vorzugsweise mindestens 30 Gew.-%, besonders bevorzugt mindestens 45 Gew.-% und ganz besonders bevorzugt mindestens 60 Gew.-% bezogen auf das Gesamtgewicht der erfindungsgemäßen Harnstoffzubereitung. Speziell bevorzugt ist der Fall, dass das Gesamtgewicht der Summe der Komponenten (A) und (B) mindestens 80 Gew.-% oder sogar mindestens 90 Gew.-% bezogen auf das Gesamtgewicht der erfindungsgemäßen Harnstoffverbindung beträgt.

### Anwendungsbereiche der erfindungsgemäßen Harnstoffzubereitungen

Die erfindungsgemäßen Harnstoffzubereitungen eignen sich bevorzugt zur Rheologiesteuerung, insbesondere zur Thixotropierung, von flüssigen Systemen.

Die Erfindung betrifft außerdem die Verwendung der erfindungsgemäßen Harnstoffzubereitungen zur Rheologiesteuerung, insbesondere zur Thixotropierung, einer flüssigen Mischung. Diese flüssige Mischung liegt bevorzugt als Beschichtung, insbesondere als Lack, als Kunststoffformulierung, als Pigmentpaste, als Dichtstoffformulierung, als Kosmetikum, als Keramikformulierung, als Klebstoffformulierung, als Vergussmasse, als Baustoffformulierung, als Schmierstoff, als Spachtelmasse, in Form eines Sprühmittels (z.B. als sog. Deposition Aid in Pflanzenschutzmitteln), als Druckfarbe oder als Tinte, beispielsweise als Inkjet-Tinte, vor.

Schließlich betrifft die vorliegende Erfindung ein flüssiges Medium, das als Beschichtungsmittel, als Kunststoffformulierung, als Pigmentpaste, als Dichtstoffformulierung, als Kosmetikum, als Keramikformulierung, als Klebstoffformulierung, als Vergussmasse, als Baustoffformulierung, als Schmierstoff, als Spachtelmasse, als Druckfarbe oder als Tinte vorliegt und welche 0,1 bis 7,5 Gew.-% der erfindungsgemäßen Harnstoffzubereitung, bezogen auf das Gesamtgewicht der Formulierung, das heißt das Gesamtgewicht aus flüssigem Medium und der Harnstoffzubereitung enthält. Eine besonders bevorzugte Ausführungsform der Erfindung betrifft ein flüssiges Medium (das heißt eine Formulierung), welches 0,2 bis 5 Gew.-%, besonders bevorzugt 0,3 bis 4 Gew.-%, bezogen auf das Gesamtgewicht aus flüssigem Medium und der erfindungsgemäßen Harnstoffzubereitung enthält.

Besonders bevorzugt ist hierbei die Verwendung der erfindungsgemäßen Harnstoffzubereitung als Rheologiesteuerungsmittel, bevorzugt als Thixotropiermittel, zur Rheologiesteuerung von Lacken, Druckfarben, Tinten (wie z.B. Inkjet-Tinten), Kunststoff-Formulierungen, Kosmetikzubereitungen, Baustoff-Formulierungen, Schmierstoffen und/oder Klebstoffen sowie bei Formulierungen, die bei der Erdgas- und Erdölförderung eingesetzt werden.

Bei den Lacken, Druckfarben und Tinten, insbesondere Inkjet-Tinten kann es sich sowohl um lösemittelhaltige als auch lösemittelfreie oder wasserbasierte Lacke, Druckfarben und Tinten, insbesondere Inkjet-Tinten handeln. Lacke sind in unterschiedlichsten Anwendungsfeldern einsetzbar, unter anderem im Bereich Automobillacke, Bautenlacke, Schutzlacke, unter anderen zur Lackierung von Schiffen und Brücken, Can- und Coil-Coating-Lacke, Holz- und Möbellacke, Industrielacke, Lacke zur Lackierung von Kunststoffen, Drahtlacke, Beschichtungsmittel zur Beschichtung von Lebensmitteln und Saatgut sowie auch als sogenannte Color Resists, welche für Farbfilter, beispielsweise in Flüssigkristall-Displays eingesetzt werden. Der Anwendungsbereich Lacke umfasst auch pastöse Materialien, welche in der Regel einen sehr hohen Anteil an Feststoffen und einen geringen Anteil von flüssigen Komponenten aufweisen, beispielsweise sogenannte Pigmentpasten oder auch Pasten auf Basis von feinverteilten Metallteilchen oder Metallpulvern wie beispielsweise solchen auf Basis von Silber, Kupfer, Zink, Aluminium, Bronze und Messing.

Bei den Kunststoff-Formulierungen kann es sich um die (flüssigen) Ausgangsmaterialien zur Herstellung von Kunststoff-Materialien handeln, die bevorzugt durch einen chemischen Vernetzungsprozess ("Härtung" zu einem Duromer) umgesetzt werden. Bevorzugte Kunststoffzubereitungen sind daher ungesättigte Polyesterharze, Vinylesterharze, Acrylatharze, Epoxidharze, Polyurethanharze, Formaldehydharze (wie Melamin-Formaldehyd oder Harnstoff-Formaldehyd). Diese können unter unterschiedlichsten Bedingungen ausgehärtet werden, so z.B. bei Raumtemperatur (kalthärtende Systeme) oder bei erhöhter Temperatur (heißhärtende Systeme), gegebenenfalls auch unter Aufbringung von Druck ("Closed Mold"-Applikation, Sheet Molding Compound oder Bulk Molding Compound). Zu den bevorzugten Kunststoff-Formulierungen zählen auch PVC-Plastisole.

Bei den Kosmetikzubereitungen kann es sich um mannigfaltige flüssige Kompositionen handeln, die im sogenannten Personal Care- oder auch Health Care-Bereich eingesetzt werden, so z.B. Lotionen, Cremes, Pasten wie beispielsweise Zahnpasta, Schäume wie beispielsweise Rasierschaum, Gele wie beispielsweise Rasiergel, Duschgel oder Arzneiwirkstoffe in gelförmiger Formulierung, Haarshampoo, Flüssigseifen, Nagellacke, Lippenstifte und Haarfärbemittel.

Bei den Sprühmitteln (als Deposition Aids) steht durch den Einsatz der erfindungsgemäßen Rheologiesteuerungsmittel die Abdriftminderung bzw. Abdriftvermeidung ("drift reduction") im Vordergrund.

Bei den Baustoff-Formulierungen kann es sich um bei Verarbeitung flüssige oder pastöse Materialien handeln, die im Bausektor eingesetzt werden und nach Aushärtung fest werden, so z.B. hydraulische Bindemittel wie Beton, Zement, Mörtel, Fliesenkleber und Gips.

Bei den Schmierstoffen handelt es sich um Mittel, welche zur Schmierung eingesetzt werden, das heißt, die der Verringerung von Reibung und Verschleiß, sowie der Kraftübertragung, Kühlung, Schwingungsdämpfung, Dichtwirkung und dem Korrosionsschutz dienen, wobei hier flüssige Schmierstoffe und Schmierfette bevorzugt sind. Auch Gleitmittel und Bohrspülmittel ("Drilling Fluids", wie sie in der Erdölförderung eingesetzt werden) zählen definitionsgemäß zu den Schmierstoffen.

Bei den Klebstoffen kann es sich um alle unter Verarbeitungsbedingungen flüssigen Prozesswerkstoffe handeln, welche Fügeteile durch Flächenhaftung und innere Festigkeit verbinden können. Klebstoffe können lösemittelhaltig, lösemittelfrei oder wasserbasiert sein.

Nachstehend soll die vorliegende Erfindung zusätzlich anhand von Beispielen näher erläutert werden.

### BEISPIELE

### Bestimmung des Molekulargewichts:

Das gewichtsmittlere Molekulargewicht ist das Gewichtsmittel der mittels Gelpermeationschromatographie (GPC) bestimmten Molmassenverteilung. Die Molmassenverteilung wird gemäß DIN 55672 Teil 2 bestimmt. Als Eluent wird eine Lösung von Lithiumbromid (Gehalt 5 g/L) in Dimethylacetamid verwendet. Zur Kalibrierung werden eng verteilte, linear aufgebaute Polymethylmethacrylat-Standards mit Molekulargewichten zwischen 1000000 und 102 g/mol verwendet. Die Temperatur des gesamten GPC-Systems (Injektor, Probenteller, Detektoren und Säulen) beträgt 80°C.

Aminzahlen wurden bestimmt gemäß DIN 16945. Unter der Anhydridzahl (ASZ) wird die Menge KOH in mg verstanden, die der Neutralisation einer Carboxylgruppe des Anhydrids in 1 g Substanz entspricht. Hierzu wird das Anhydrid zunächst mit n-Butylamin zur Carbonsäure und zum Säureamid umgesetzt. Das überschüssige Amin wird mit HCl in Isopropanol zurücktitriert, aus dem verbrauchten Amin kann unmittelbar die Anhydridzahl berechnet werden. Brechungsindices wurden bei 20°C bestimmt nach DIN 51423. Die Dichte wurde bei 20°C bestimmt nach DIN EN ISO 2811, Teil 3.

### Festkörper

Die angegebenen Festkörper sind rechnerische Festkörper, die nicht experimentell bestimmt werden, sondern sich rechnerisch aus den Einwaagen der eingesetzten Komponenten ergeben.

### Herstellung von N-Alkylamiden

### Beispiel 1 a (R¹ = Methyl, R²= R³= n-Butyl)

In einem Reaktionsgefäß (Rundkolben mit Rührer, Tropftrichter und Rückflusskühler) wurden unter Stickstoffatmosphäre 425,7 g (3,3 mol) Dibutylamin vorgelegt. Unter Rühren werden langsam 306g (3,0 mol) Essigsäureanhydrid zugetropft. Die Reaktion war stark exotherm. Durch Kühlen mit einem Wasserbad wurde die Temperatur bei 80°C gehalten. Nach beendeter Zugabe wurde auf 140°C aufgeheizt und 2h unter Rückfluss gekocht. Die Reaktionsmischung hatte nach beendeter Reaktionszeit eine Aminzahl von 21,7 mg KOH/g und eine Anhydridsäurezahl von 0,5 mg KOH/g. Anschließend wurde ein Wasserabscheider in die Apparatur eingebaut und die entstandene Essigsäure bei 140°C und unter Vakuum von 180 mbar abdestilliert. Die Aminzahl lag nach Destillation bei 8,9 mg KOH/g. Das Reaktionsprodukt wurde durch Destillation mittels eines Dünnschichtverdampfers bei 120°C und <1 mbar aufgereinigt.

### Beispiel 2 a (R¹ = R² = R³ = n-Butyl)

In einem Reaktionsgefäß (Rundkolben mit Rührer, Tropftrichter und Rückflusskühler) wurden unter Stickstoffatmosphäre 336,0 g (3,3 mol) Valeriansäure vorgelegt. Langsam und unter Rühren wurden 467,0 g (3,6 mol) Dibutylamin zugetropft. Anschließend wurden 1,6 g p-Toluolsulfonsäure zugesetzt und auf 170°C aufgeheizt. Die Reaktionsmischung wurde 2h unter Rückfluss gekocht. Die Reaktionsmischung hatte nach beendeter Reaktionszeit eine Aminzahl von 23,7mg KOH/g. Zuletzt wurde ein Wasserabscheider angeschlossen und das Reaktionswasser sowie das überschüssige Dibutylamin bei 170°C unter Vakuum von 180mbar in 5 Stunden abdestilliert. Das Reaktionsprodukt wurde durch Destillation mittels eines Dünnschichtverdampfers bei 120°C und <1 mbar aufgereinigt. Die Aminzahl war danach <1mg KOH/g.

### Beispiel 3 a (R¹-R² = CH₂-CH₂-CH₂, R³ = n-Hexyl)

In einem Reaktionsgefäß (Rundkolben mit Rührer, Rückflusskühler, Wasserabscheider und Tropftrichter) wurden unter Stickstoffatmosphäre bei 60°C 121,0 g (1,2 mol) n-Hexylamin vorgelegt. Innerhalb von 45 Minuten wurden unter Rühren 86,0g (1,0 mol) Butyrolacton zugetropft. Die Temperatur stieg dabei auf 75°C. Die Temperatur wurde für 2 Stunden auf 110°C, anschließend für 4 Stunden auf 200°C, danach für 7 Stunden auf 230°C erhöht und dabei das entstehende Reaktionswasser kontinuierlich abdestilliert. Nach beendeter Reaktionszeit war eine klare orange Flüssigkeit mit einer Aminzahl von 4,5 mg KOH/g und einer Hydroxylzahl von 12,4 mg KOH/g entstanden. Das Reaktionsprodukt wurde durch Destillation mittels eines Dünnschichtverdampfers bei 120°C und <1 mbar aufgereinigt.

### Beispiel 4 a (R¹-R² = CH₂-CH₂-CH₂, R³ = n-Pentyl)

In einem Reaktionsgefäß (Rundkolben mit Rührer, Rückflusskühler, Wasserabscheider und Tropftrichter) wurden unter Stickstoffatmosphäre bei 60°C 104,4 g (1,2 mol) n-Pentylamin vorgelegt. Innerhalb von 35 Minuten wurden unter Rühren 86,0 g (1,0 mol) Butyrolacton zugetropft. Die Temperatur stieg dabei auf 80°C. Die Temperatur wurde für 2 Stunden auf 110°C, anschließend für 4 Stunden auf 200°C, danach für 7 Stunden auf 230°C erhöht und dabei das entstehende Reaktionswasser kontinuierlich abdestilliert. Nach beendeter Reaktionszeit war eine niedrigviskose gelbbräunliche Flüssigkeit mit einer Aminzahl von 4,5mg KOH/g entstanden. Das Reaktionsprodukt wurde durch Destillation mittels eines Dünnschichtverdampfers bei 120°C und <1 mbar aufgereinigt. Die Aminzahl war danach <1 mg KOH/g.

### Beispiel 5 a (R¹-R² = CH₂-CH₂-CH₂, R³ = Benzyl)

In einem Reaktionsgefäß (Rundkolben mit Rührer, Rückflusskühler, Wasserabscheider und Tropftrichter) wurden unter Stickstoffatmosphäre bei 60°C 0,38 g Dibutylzinndilaurat und 107,0g (1,0 mol) Benzylamin vorgelegt. Innerhalb von 30 Minuten wurden unter Rühren 86,0 g (1,0 mol) Butyrolacton zugetropft. Die Temperatur stieg dabei auf 100°C. Die Temperatur wurde für 2 Stunden auf 170°C, anschließend für 11 Stunden auf 240°C erhöht und dabei kontinuierlich das entstehende Reaktionswasser abdestilliert. Nach beendeter Reaktionszeit war eine gelbe, niedrigviskose Flüssigkeit mit einer Aminzahl von 12,7 mg KOH/g entstanden. Das Reaktionsprodukt wurde durch Destillation mittels eines Dünnschichtverdampfers bei 120°C und <1 mbar aufgereinigt. Die Aminzahl war danach <1 mg KOH/g.

### Beispiel 6 a (R¹-R² = CH₂-CH₂-CH₂-CH₂-CH₂, R³ = n-Butyl)

In einem Reaktionsgefäß (Rundkolben mit Rührer, Rückflusskühler, Wasserabscheider und Tropftrichter) wurden unter Stickstoffatmosphäre bei 60°C 0,37 g p-Toluolsulfonsäure und 73,0g (1,0 mol) n-Butylamin vorgelegt. Innerhalb von 45 Minuten wurden unter Rühren 114,0g (1,0 mol) Caprolacton zugetropft. Die Temperatur stieg dabei auf 85°C.
Die Temperatur wurde für 2 Stunden auf 120°C, dann für 2 Stunden auf 140°C und anschließend für 8 Stunden auf 230°C erhöht und dabei kontinuierlich das entstehende Reaktionswasser abdestilliert.
Das entstandene flüssige Produkt hatte eine Aminzahl von 4,7 mg KOH/g und eine Viskosität von 566 mPas.

### Beispiel 7 a (R¹-R² = CH₂-CH₂-CH₂-CH₂-CH₂, R³ = n-Hexyl)

In einem Reaktionsgefäß (Rundkolben mit Rührer, Rückflusskühler, Wasserabscheider und Tropftrichter) wurden unter Stickstoffatmosphäre bei 60°C 0,49 g p-Toluolsulfonsäure und 131,0g (1,29 mol) n-Hexylamin vorgelegt. Innerhalb von 55 Minuten wurden unter Rühren 114,0g (1,0 mol) Caprolacton zugetropft. Die Temperatur stieg dabei auf 80°C. Die Temperatur wurde für 2 Stunden auf 140°C, anschließend für 11 Stunden auf 230°C erhöht und dabei das entstehende Reaktionswasser abdestilliert. Das entstandene wachsartige Produkt hatte eine Aminzahl von 15,9 mg KOH/g.

### Beispiel 8 a (R¹-R² = CH(CH₃)-CH₂-CH₂, R³ = n-Hexyl)

In einem Reaktionsgefäß (Rundkolben mit Rührer, Rückflusskühler, Wasserabscheider und Tropftrichter) wurden unter Stickstoffatmosphäre bei 60°C 52,0g (0,51 mol) n-Hexylamin vorgelegt. Innerhalb von 25 Minuten wurden unter Rühren 51,5g (0,51 mol) gamma-Valerolacton zugetropft. Die Temperatur stieg dabei auf 80°C. Die Temperatur wurde für 2 Stunden auf 140°C, anschließend für 10 Stunden auf 230°C erhöht und dabei das entstehende Reaktionswasser abdestilliert. Es wurde eine niedrigviskose, bräunliche Flüssigkeit erhalten.

### Beispiel 9 a (R¹-R² = CH(CH₃)-CH₂-CH₂, R³ = n-Butyl)

In einem Reaktionsgefäß (Rundkolben mit Rührer, Rückflusskühler, Wasserabscheider und Tropftrichter) wurden unter Stickstoffatmosphäre bei 60°C 73,0g (1,0 mol) n-Butylamin vorgelegt. Innerhalb von 45 Minuten wurden unter Rühren 100,0g (1,0 mol) gamma-Valerolacton zugetropft. Die Temperatur stieg dabei auf 80°C. Die Temperatur wurde für 2 Stunden auf 140°C, anschließend für 10 Stunden auf 230°C erhöht und dabei kontinuierlich das entstehende Reaktionswasser abdestilliert. Es wurde bräunliche Flüssigkeit mit einer Aminzahl von 5,5 mg KOH/g erhalten. Der Brechungsindex lag bei 1,4747 und die Viskosität betrug 3 mPas.

### Beispiel 10 a (nicht erfindungsgemäß; (R¹-R² = CH₂-CH₂-CH₂, R³ = n-Butyl)

In einem Reaktionsgefäß (Rundkolben mit Rührer, Rückflusskühler, Wasserabscheider und Tropftrichter) wurden unter Stickstoffatmosphäre 222,2g (3,0mol) n-Butylamin vorgelegt. Innerhalb von 45 Minuten wurden unter Rühren 172,0g (2,0 mol) Butyrolacton zugetropft. Die Temperatur stieg dabei auf 80°C. Die Temperatur wurde für 2 Stunden auf 140°C, anschließend für 10 Stunden auf 230°C erhöht und dabei kontinuierlich das entstehende Reaktionswasser und das überschüssige Amin abdestilliert. Es wurde bräunliche Flüssigkeit mit einer Aminzahl von 3,7 mg KOH/g erhalten. Die Dichte lag bei 0,96 g/cm3.

### Beispiel 11 a (R¹-R² = CH₂-CH₂-CH₂, R³= CH₂-CH₂-CH₂-Imidazol)

In einem Reaktionsgefäß (Rundkolben mit Rührer, Rückflusskühler, Wasserabscheider und Tropftrichter) wurden unter Stickstoffatmosphäre bei 80°C 125,0 g (1,0 mol) Aminopropylimidazol vorgelegt. Innerhalb von 45 Minuten wurden unter Rühren 94,7g (1,1 mol) Butyrolacton zugetropft. Die Temperatur wurde über eine Temperaturrampe von jeweils 20 Minuten um jeweils 10°C bis zur Endtemperatur von 250°C erhöht. Danach wurde die Temperatur für 6h bei 250°C gehalten. Während der gesamten Reaktionszeit wurde das entstehende Reaktionswasser abdestilliert. Es wurden 0,4g p-Toluolsulfonsäure zugegeben und weitere 2 Stunden bei 250°C Wasser abgeschieden. Das Reaktionsprodukt ist flüssig und sehr dunkel gefärbt.

### Beispiel 12 a (nicht erfindungsgemäß; R¹-R² = CH₂-CH₂-CH₂, R³ = n-Propyl)

In einem Autoklaven mit Rührer wurden 60,0 g (1 mol) n-Propylamin vorgelegt und auf 60°C erwärmt. Innerhalb von 45 Minuten wurden unter Rühren mit 86,0 g (1 mol) Butyrolacton zugegeben. Die Temperatur stieg zunächst auf 95°C. Anschließend wird noch 4 Stunden bei 90 °C gerührt. Das Reaktionsgemisch wird hiernach in einen Rundkolben mit Rührer, Rückflusskühler, Wasserabscheider und Tropftrichter überführt und auf 100 °C erwärmt. Unter Rühren wurde die Temperatur anschließend stündlich um 15°C erhöht. Die Nachreaktion erfolgte zusätzlich für 10 Stunden bei 200°C . Während der gesamten Reaktionszeit wurde das entstehende Reaktionswasser abdestilliert.
Es wurde hellgelbe Flüssigkeit mit einer Aminzahl von 4mg KOH/g erhalten. Das Reaktionsprodukt wurde durch Destillation mittels eines Dünnschichtverdampfers bei 120 °C und einem Druck von < 1mbar aufgereinigt.

### Herstellung der Harnstoffzubereitungen

### Produktbeispiel a1

### Stufe 1:

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2:

Ein Vierhalskolben wird mit Rührer, Tropftrichter, Thermometer und Rückflusskühler versehen. Es werden 118,2 g N-n-Octylbutyrolactam (Sigma-Aldrich) vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein klares, farbloses und leicht viskoses Produkt erhalten. Die Aminzahl liegt unter 1,0 mg KOH/g (bestimmt gemäß DIN 16945). Das Produkt enthält 38 Gew.-% Harnstoffkomponente.

### Produktbeispiel a2

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 118,2 g 1-Benzylpyrrolidin-2-on (Beispiel 5a) vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein leicht trübes, gelbes, viskoses Produkt erhalten. Die Aminzahl liegt bei 1 mg KOH/g (bestimmt gemäß DIN 16945). Das Produkt enthält 38 Gew.-% Harnstoffkomponente.

### Produktbeispiel a3 (nicht erfindungsgemäß)

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 64,5 g 1-Propylpyrrolidin-2-on (Beispiel 12a) vorgelegt und unter Stickstoffatmosphäre unter Rühren auf 120°C erwärmt. 5,1 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein leicht trübes, gelbliches und viskoses Produkt erhalten. Die Aminzahl liegt bei 5,2 mg KOH/g (bestimmt gemäß DIN 16945). Das Produkt enthält 52 Gew.-% Harnstoffkomponente.

### Produktbeispiel a4 (nicht erfindunasaemäß)

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 118,2 g 1-Pentylpyrrolidin-2-on (Beispiel 4a) vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Die Aminzahl liegt bei 3,6 mg KOH/g (bestimmt gemäß DIN 16945). Das Produkt enthält 38 Gew.-% Harnstoffkomponente.

### Produktbeispiel a5

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 118,2 g 1-Hexylpyrrolidin-2-on (Beispiel 3a) vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Die Aminzahl liegt bei 3,6 mg KOH/g (bestimmt gemäß DIN 16945). Das Produkt enthält 38 Gew.-% Harnstoffkomponente.

### Produktbeispiel a6

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 239,1 g eines Gemischs aus Octansäuredimethylamid und Decansäuredimethylamid (Fa. BASF, Agnique AMD810) vorgelegt und unter Stickstoffatmosphäre unter Rühren auf 120°C erwärmt. 5,1 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert.
Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein trübes, farbloses und leicht viskoses Produkt erhalten. Die Aminzahl liegt unter 2 mg KOH/g (bestimmt gemäß DIN 16945). Das Produkt enthält 23 Gew.-% Harnstoffkomponente.

### Produktbeispiel a7

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 239,1 g Dibutylacetamid (Beispiel 1a) vorgelegt und unter Stickstoffatmosphäre unter Rühren auf 120°C erwärmt. 5,1 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85°C nicht überschreitet. Zur Vervollständigung der Reaktion wird das Reaktionsgemisch noch 3 Stunden bei 80 °C gerührt. Es wird ein trübes, farbloses und leicht viskoses Produkt erhalten. Die Aminzahl liegt unter 2 mg KOH/g (bestimmt gemäß DIN 16945). Das Produkt enthält 23 Gew.-% Harnstoffkomponente.

### Produktbeispiel a8

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 252,0g eines Gemischs aus Octansäuredimethylamid und Decansäuredimethylamid (BASF, Agnique AMD810) auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein leicht trübes und leicht viskoses Produkt erhalten. Das Produkt enthält 29 Gew.-% Harnstoffkomponente.

### Produktbeispiel a9

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 252,0g Dibutylacetamid (Beispiel 1a) auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80°C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85°C nicht überschreitet. Zur Vervollständigung der Reaktion wird das Reaktionsgemisch für 3 Stunden bei 80°C gerührt. Es wird ein trübes und leicht viskoses Produkt erhalten. Das Produkt enthält 29 Gew.-% der Harnstoffkomponente.

### Produktbeispiel a10

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 162,0g N-Benzylpyrrolidon (Beispiel 5a) auf 100 °C erwärmt und bei Erreichen der Temperatur mit 4,2 g Lithiumchlorid versetzt. Das Lithiumchlorid wird danach innerhalb 1 Stunde bei 100 °C unter Rühren gelöst. Anschließend wird die Temperatur auf 80 °C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85 °C nicht überschreitet. Zur Vervollständigung der Reaktion wird das Reaktionsgemisch für 3 Stunden bei 80°C gerührt. Es wird ein klares, rötlich gefärbtes und viskoses Produkt erhalten. Das Produkt enthält 38 Gew.-% Harnstoffkomponente.

### Produktbeispiel a11

### Stufe 1

Zunächst werden 93,6 g eines Monoaddukts gemäß der Patentschrift EP 1188779 aus einem Polyethylenglycolmonomethylether mit einer Molmasse von 450 g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 162,0 g N-n-Octylbutyrolactam (Fa. Sigma-Aldrich) auf 100 °C erwärmt und bei Erreichen der Temperatur mit 4,2 g Lithiumchlorid versetzt. Das Lithiumchlorid wird danach innerhalb 1 Stunde bei 100 °C unter Rühren gelöst. Anschließend wird die Temperatur auf 80 °C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85 °C nicht überschreitet. Zur Vervollständigung der Reaktion wird das Reaktionsgemisch für 3 Stunden bei 80 °C gerührt. Es wird ein klares, gelbliches Produkt erhalten. Das Produkt enthält 38 Gew.-% Harnstoffkomponente.

### Produktbeispiel a12

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 1,7 g (0,039 mol) LiCI in 75 g N-n-Octylbutyrolactam (Sigma-Aldrich) gelöst. Danach werden 3,6 g (0,026 mol) meta-Xylylendiamin zugegeben und die klare Mischung auf 80 °C erwärmt. Anschließend werden 19,8 g (0,052 mol) des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80°C gerührt. Es wird ein klares und flüssiges Produkt erhalten. Der Anteil der Harnstoffkomponente im erhaltenen Produkt ist 23 Gew.-%.

### Produktbeispiel a13

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 12,6 g (0,3 mol) LiCI in 279 g N-Benzylbutyrolactam (Beispiel 5a) gelöst. Danach werden 17,0 g (0,125 mol) meta-Xylylendiamin zugegeben und die klare Mischung auf 80 °C erwärmt. Anschließend werden 90,0 g (0,25 mol) des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 8 0°C gerührt. Es wird ein gelbes und viskoses Produkt erhalten. Der Anteil der Harnstoffkomponente im erhaltenen Produkt ist 27 Gew.-%.

### Produktbeispiel a14

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 8,4 g LiCI in 147,2 g N-n-Octylbutyrolactam (Sigma-Aldrich) gelöst. Danach werden 13,6 g meta-Xylylendiamin zugegeben und die klare Mischung auf 80 °C erwärmt. Anschließend werden 76,1 g des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein leicht trübes und gut fließfähiges Produkt erhalten. Der Anteil der Harnstoffkomponente im erhaltenen Produkt ist 37 Gew.-%.

### Produktbeispiel a15

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 1,7 g (0,039 mol) LiCI in 75 g N-n-Hexylbutyrolactam (Beispiel 3a) gelöst. Danach werden 3,6 g (0,026 mol) meta-Xylylendiamin zugegeben und die klare Mischung auf 80 °C erwärmt. Anschließend werden 19,8 g (0,052 mol) des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein klares und flüssiges Produkt erhalten. Der Anteil der Harnstoffkomponente im erhaltenen Produkt ist 23 Gew.-%.

### Produktbeispiel a16

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 8,4 g LiCI in 147,2 g N-n-Hexylbutyrolactam (Beispiel 3a) gelöst. Danach werden 13,6 g meta-Xylylendiamin zugegeben und die klare Mischung auf 80 °C erwärmt. Anschließend werden 76,1 g des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein leicht trübes und gut fließfähiges Produkt erhalten. Der Anteil der Harnstoffkomponente im erhaltenen Produkt ist 37 Gew.-%.

### Produktbeispiele - Übersicht

| Produktbeispiel | (A) / % | (B) | | | | (D) / % |
|---|---|---|---|---|---|---|
| | | R¹ | R² | R³ | % | |
| a1 | H1 / 38 | gemeinsam: CH₂-CH₂-CH₂ | | n-Octyl | 60 | LiCl / 2 |
| a2 | H1 / 38 | gemeinsam: CH₂-CH₂-CH₂ | | Benzyl | 60 | LiCl / 2 |
| a3* | H1 / 52 | gemeinsam: CH₂-CH₂-CH₂ | | n-Propyl | 45 | LiCl / 4 |
| a4* | H1 / 38 | gemeinsam: CH₂-CH₂-CH₂ | | n-Pentyl | 60 | LiCl / 2 |
| a5 | H1 / 38 | gemeinsam: CH₂-CH₂-CH₂ | | n-Hexyl | 60 | LiCl / 2 |
| a6 | H1 / 23 | n-Octyl/n-Decyl-Mischung | Methyl | Methyl | 75 | LiCl / 2 |
| a7 | H1 / 23 | Methyl | n-Butyl | n-Butyl | 75 | LiCl / 2 |
| a8 | H2 / 29 | n-Octyl/n-Decyl-Mischung | Methyl | Methyl | 70 | LiCl / 1 |
| a9 | H2 / 29 | Methyl | n-Butyl | n-Butyl | 70 | LiCl / 1 |
| a10 | H2 / 38 | gemeinsam: CH₂-CH₂-CH₂ | | Benzyl | 60 | LiCl / 2 |
| a11 | H2 / 38 | gemeinsam: CH₂-CH₂-CH₂ | | n-Octyl | 60 | LiCl / 2 |
| a12 | H3 / 23 | gemeinsam: CH₂-CH₂-CH₂ | | n-Octyl | 75 | LiCl / 2 |
| a13 | H3 / 27 | gemeinsam: CH₂-CH₂-CH₂ | | Benzyl | 70 | LiCl / 3 |
| a14 | H3 / 37 | gemeinsam: CH₂-CH₂-CH₂ | | n-Octyl | 60 | LiCl / 3 |
| a15 | H3 / 23 | gemeinsam: CH₂-CH₂-CH₂ | | n-Hexyl | 75 | LiCl / 2 |
| a16 | H3 / 37 | gemeinsam: CH₂-CH₂-CH₂ | | n-Hexyl | 60 | LiCl / 3 |

| | | | | | | |
|---|---|---|---|---|---|---|
| H1: Addukt aus 2 BuO-PEG-OC(O)NH-Tolyl-NCO und 1 m-Xylylendiamin H2: Addukt aus 2 MeO-PEG-OC(O)NH-Tolyl-NCO und 1 m-Xylylendiamin H3: Addukt aus 2 Lauryl-OC(O)NH-Tolyl-NCO und 1 m-Xylylendiamin * = nicht erfindungsgemäß | | | | | | |

### Vergleichsbeispiele:

### Vergleichsbeispiel V1

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 72,7 g 1-Ethylpyrrolidin-2-on vorgelegt und unter Stickstoffatmosphäre unter Rühren auf 120 °C erwärmt. 4,2 g Lithiumchlorid werden zugegeben und bei dieser Temperatur unter Rühren in 1 Stunde gelöst. Anschließend wird die Temperatur auf 80 °C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945). Das Produkt enthält 49 Gew.-% der Harnstoffkomponente.

### Vergleichsbeispiel V2

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 72,7 g Dimethylsulfoxid vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Es wird ein klares, gelbes Produkt erhalten. Die Aminzahl liegt bei 1 mg KOH/g (bestimmt gemäß DIN 16945). Das Produkt enthält 49 Gew.-% der Harnstoffkomponente.

### Vergleichsbeispiel V3

### Stufe 1

Zunächst werden 64,4 g eines Diisocyanat-Monoaddukts gemäß der Patentschrift EP 1188779 aus einem Polyethylenglycolmonobutylether mit einer Hydroxylzahl von 220 mg KOH/g (bestimmt gemäß DIN / ISO 4629) und eines Gemisches aus 35% 2,4-Toluylendiisocyanat und 65% 2,6-Toluylendiisocyanat hergestellt.

### Stufe 2

Ein Vierhalskolben wird mit Rührer, Tropftrichter, Thermometer und Rückflußkühler versehen. Es werden 72,7 g N-Methylpyrrolidon vorgelegt und unter Stickstoffatmosphäre unter Rühren auf 120°C erwärmt. 4,2 g Lithiumchlorid werden zugegeben und bei dieser Temperatur unter Rühren in 1 Stunde gelöst. Anschließend wird die Temperatur auf 80°C gesenkt. Es werden 10,2 g m-Xylylendiamin zugegeben und die Mischung homogenisiert. Das vorab (Stufe 1) hergestellte Isocyanataddukt wird unter Rühren innerhalb 1 Stunde zur Aminlösung so langsam zugetropft, dass die Temperatur 85 °C nicht überschreitet. Zur Vervollständigung der Reaktion wird das Reaktionsgemisch noch 3 Stunden bei 80 °C gerührt. Es wird ein klares, gelbes Produkt erhalten. Das Produkt enthält 49 Gew.-% der Harnstoffkomponente.

### Vergleichsbeispiel V4

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 1,7 g (0,039 mol) LiCI in 75 g N-Methylpyrrolidon (handelsübliche Ware) gelöst. Danach werden 3,6 g (0,026 mol) meta-Xylylendiamin zugegeben und die klare Mischung auf 80 °C erwärmt. Anschließend werden 19,8 g (0,052 mol) des Monoaddukts aus Desmodur T100 und Laurylalkohol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein klares und flüssiges Produkt erhalten. Der Anteil der Harnstoffkomponente im erhaltenen Produkts ist 23 Gew.-%.

### Vergleichsbeispiel V5

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 1,7 g (0,039 mol) LiCI in 75 g 1-N-Ethylpyrrolidon (handelsübliche Ware) gelöst. Danach werden 3,6 g (0,026 mol) meta-Xylylendiamin zugegeben und die klare Mischung auf 80 °C erwärmt. Anschließend werden 19,8 g (0,052 mol) des Monoaddukts aus Desmodur T100 und Laurylalkohol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein klares und niedrigviskoses Produkt erhalten. Der Anteil der Harnstoffkomponente im erhaltenen Produkt ist 23 Gew.-%.

### Vergleichsbeispiel V6

### Stufe 1

Zunächst werden 93,6 g eines Monoaddukts gemäß der Patentschrift EP 1188779 aus einem Polyethylenglycolmonomethylether mit einer Molmasse von 450g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 99,7g N-Methylpyrrolidon (handelsübliche Ware BASF) auf 100°C erwärmt und bei Erreichen der Temperatur mit 4,2 g Lithiumchlorid versetzt. Das Lithiumchlorid wird danach innerhalb 1 Stunde bei 100°C unter Rühren gelöst. Anschließend wird die Temperatur auf 80 °C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85 °C nicht überschreitet. Zur Vervollständigung der Reaktion wird das Reaktionsgemisch für 3 Stunden bei 80 °C gerührt. Es wird ein klares, gelbliches Produkt erhalten. Das Produkt enthält 50 Gew.-% Harnstoffkomponente.

### Vergleichsbeispiel V7

### Stufe 1

Zunächst werden 93,6 g eines Monoaddukts gemäß der Patentschrift EP 1188779 aus einem Polyethylenglycolmonomethylether mit einer Molmasse von 450g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 132,0g Dimethylsulfoxid (handelsübliche Ware der Firma Sigma Aldrich) auf 100 °C erwärmt und bei Erreichen der Temperatur mit 4,2 g Lithiumchlorid versetzt. Das Lithiumchlorid wird danach innerhalb 1 Stunde bei 100 °C unter Rühren gelöst. Anschließend wird die Temperatur auf 80 °C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85 °C nicht überschreitet. Zur Vervollständigung der Reaktion wird das Reaktionsgemisch für 3 Stunden bei 80 °C gerührt. Es wird ein klares, gelbliches Produkt erhalten. Das Produkt enthält 43 Gew.-% Harnstoffkomponente.

### Vergleichsbeispiel V8

### Stufe 1

Zunächst werden 93,6 g eines Monoaddukts gemäß der Patentschrift EP 1188779 aus einem Polyethylenglycolmonomethylether mit einer Molmasse von 450g/mol und einem Gemisch aus 35% 2,4-Toluylendiisocyanat und 65% 2,6-Toluylendiisocyanat hergestellt.

### Stufe 2

In einem Vierhalskolben mit Rührer, Tropftrichter, Thermometer und Rückflußkühler werden 99,7g N-Ethylpyrrolidon (handelsübliche Ware BASF) auf 100 °C erwärmt und bei Erreichen der Temperatur mit 4,2 g Lithiumchlorid versetzt. Das Lithiumchlorid wird danach innerhalb 1 Stunde bei 100 °C unter Rühren gelöst. Anschließend wird die Temperatur auf 80 °C gesenkt. Es werden 10,2 g m-Xylylendiamin zugegeben und die Mischung homogenisiert. Das vorab hergestellte Isocyanataddukt (Stufe 1) wird unter Rühren innerhalb 1 Stunde so langsam zur Aminlösung zugetropft, dass die Temperatur 85 °C nicht überschreitet. Zur Vervollständigung der Reaktion wird das Reaktionsgemisch für 3 Stunden bei 80 °C gerührt. Es wird ein klares, gelbliches Produkt erhalten. Das Produkt enthält 50 Gew.-% Harnstoffkomponente.

### Vergleichsbeispiel V9

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 1,7 g (0,039 mol) LiCI in 75 g Dimethylsulfoxid gelöst. Danach werden 3,6 g (0,026 mol) meta-Xylylendiamin zugegeben und die klare Mischung auf 80 °C erwärmt. Anschließend werden 19,8 g (0,052 mol) des Monoaddukts aus Desmodur T100 und Laurylalkohol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein klares und flüssiges Produkt erhalten. Der Anteil der Harnstoffkomponente im erhaltenen Produkts ist 23 Gew.-%. Das Produkt wird im geschlossenen Gefäß bei Raumtemperatur aufbewahrt. Im Gegensatz zu allen anderen Vergleichbeispielen ist bereits nach einer Woche ein leichter Bodensatz feststellbar; nach zwei Wochen ist das Produkt stark trübe.

### Vergleichsbeispiel V10

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 8,4 g LiCI in 147,2 g N-Methylpyrrolidon gelöst. Danach werden 13,6 g meta-Xylylendiamin zugegeben und die klare Mischung auf 80 °C erwärmt. Anschließend werden 76,1 g des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80°C gerührt. Es wird ein leicht trübes und gut fließfähiges Produkt erhalten. Der Anteil der Harnstoffkomponente im erhaltenen Produkt ist 37 Gew.-%.

### Vergleichsbeispiel V11

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 1,7 g (0,039 mol) LiCI in 75 g N-n-Pentylbutyrolactam (Beispiel 4a) gelöst. Danach werden 3,6 g (0,026 mol) meta-Xylylendiamin zugegeben und die klare Mischung auf 80 °C erwärmt. Anschließend werden 19,8 g (0,052 mol) des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein klares und flüssiges Produkt erhalten. Der Anteil der Harnstoffkomponente im erhaltenen Produkt ist 23 Gew.-%.

### Vergleichsbeispiel V12

### Stufe 1

Zunächst wird ein Monoaddukt gemäß der Patentschrift EP 1188779 aus 2,4-Toluylendiisocyanat (Desmodur T100, Bayer) und Laurylalkohol hergestellt.

### Stufe 2

In einem Reaktionsgefäß (Rundkolben mit Rührer, Rückflusskühler und Tropftrichter) werden unter Stickstoffatmosphäre und Rühren 8,4 g LiCI in 147,2 g N-n-Pentylbutyrolactam (Beispiel 4a) gelöst. Danach werden 13,6 g meta-Xylylendiamin zugegeben und die klare Mischung auf 80 °C erwärmt. Anschließend werden 76,1 g des Monoaddukts aus Desmodur T100 und 1-Dodecanol unter Rühren innerhalb von 1 Stunde zugetropft, so dass die Temperatur nicht über 85 °C steigt. Zur Vervollständigung der Reaktion wird das Reaktionsgemisch für 3 Stunden bei 80 °C gerührt. Es wird ein leicht trübes und gut fließfähiges Produkt erhalten. Der Anteil der Harnstoffkomponente im erhaltenen Produkt ist 37 Gew.-%.

### Vergleichsbeispiele - Übersicht

| Vergleichsbeispiel | (A) / % | Lösemittel / % | (D) / % |
|---|---|---|---|
| V1 | H1 / 49 | N-Ethylpyrrolidon / 48 | LiCl / 3 |
| V2 | H1 / 49 | DMSO / 48 | LiCl / 3 |
| V3 | H1 / 49 | N-Methylpyrrolidon / 48 | LiCl / 3 |
| V4 | H3 / 23 | N-Methylpyrrolidon / 75 | LiCl / 2 |
| V5 | H3 / 23 | N-Ethylpyrrolidon / 75 | LiCl / 2 |
| V6 | H2 / 50 | N-Methylpyrrolidon / 48 | LiCl / 2 |
| V7 | H2 / 43 | DMSO / 55 | LiCl / 2 |
| V8 | H2 / 50 | N-Ethylpyrrolidon / 48 | LiCl / 2 |
| V9 | H3 / 23 | DMSO/75 | LiCl / 2 |
| V10 | H3 / 37 | N-Methylpyrrolidon / 60 | LiCl / 3 |
| V11 | H3 / 23 | N-n-Pentylbutyrolactam / 75 | LiCl / 2 |
| V12 | H3 / 37 | N-n-Pentylbutyrolactam / 60 | LiCl / 3 |

| | | | |
|---|---|---|---|
| H1: Addukt aus 2 BuO-PEG-OC(O)NH-Tolyl-NCO und 1 m-Xylylendiamin H2: Addukt aus 2 MeO-PEG-OC(O)NH-Tolyl-NCO und 1 m-Xylylendiamin H3: Addukt aus 2 Lauryl-OC(O)NH-Tolyl-NCO und 1 m-Xylylendiamin | | | |

### Anwendungstechnische Prüfung der als Rheologiesteuerungsmittel geeigneten Kompositionen

### Eingesetzte Rohstoffe

| **Name** | **Beschreibung** | **Hersteller** |
|---|---|---|
| Bayferrox 130M | Eisenoxidrot Pigment | Bayer |
| Blanc Fixe N | Bariumsulfat | Sachtleben Chemie GmbH |
| Borchi Nox M 2 | synthetisches Antihautbildungsmittel (Methylethyl ketoxim) | OMG Borchers GmbH |
| BYK-052 | silikonfreier Polymerentschäumer | BYK-Chemie GmbH |
| BYK-066 | Silikonhaltiger Entschäumer | BYK-Chemie GmbH |
| BYK-306 | Silikonhaltiges Oberflächenadditiv | BYK-Chemie GmbH |
| Desmodur N3390 | Aliphatisches Polyisocyanat (HDI-Trimerisat) | Bayer MaterialScience |
| Disperbyk-110 | Netz- und Dispergieradditiv | BYK-Chemie GmbH |
| Dowanol PM | Methoxypropanol | Dow Chemical Company |
| Dowanol PMA | 1,2-Propanediolmonoacetat-Monomethylether | Dow Chemical Company |
| Epikote 1001-X 75 | Bisphenol A-Harz, gelöst in Xylol | Hexion Specialty Chemicals |
| Epikure 3115-X 70 | Polyamidhärter | Hexion Specialty Chemicals |
| Isopar H | Kohlenwasserstoff-Lösemittel mit geringem Geruch und geringem Aromatenanteil (hauptsächlich bestehend aus Isoalkanen) | ExxonMobil Chemical |
| Joncryl 8280 | Acrylat-Dispersion | BASF SE Coatings & Plastic Chemicals |
| Kraton 1118 AS | Styrol-Butad ien-Blockcopolymer | Kraton Performance Polymers |
| Nuodex Combi APB | Blei- und bariumfreier Kombinationstrockner | Elementis Specialties B.V. |
| Palapreg P 17-02 | Ungesättigtes Polyesterharz zur Herstellung von faserverstärkten Kunststoffen oder von nichtverstärkten gefüllten Produkten | DSM Composite Resins |
| Setalux D A 870 BA | Polyisocyanat-vernetzendes Acrylatharz, 70%ig in Butylacetat | Nuplex Resins GmbH |
| Synthalat W48 | Wasserverdünnbares, speziell modifiziertes Alkydharz, ca. 35 %ig in BG/Ammoniak/Wasser (8 : 2,3 : 54,7) | Synthopol Chemie |
| Tronox RKB-4 | Mikronisiertes Rutil Pigment | Kerr McGee Pigments |
| Worleekyd S 366 | Langöliges Alkydharz, 60%ig in Isopar H | Worlee Chemie GmbH |

### Erklärung der Bewertungsskala

| | | |
|---|---|---|
| Gelstärke: | 1 | sehr stark |
| | 2 | stark |
| | 3 | mittel |
| | 4 | sehr schwach |
| | 5 | kein Gel |

### Trübung

| | | |
|---|---|---|
| (Verträglichkeit): | 1 | klar |
| | 2 | leicht trüb |
| | 3 | trüb |
| | 4 | stark trüb |
| | 5 | sehr stark trüb |

### Prüfsystem 1: Setalux D A 870 BA Klarlack

Für diese Prüfung werden - falls erforderlich - durch Zugabe einer weiteren Menge der jeweiligen Amidverbindung zur Komposition für alle geprüften Produkte ein Gehalt der Harnstoffverbindung von 38 Gew.-% in der Additivkomposition eingestellt. In einer 100 ml-Glasflasche werden 50 g Setalux D A 870 BA-Klarlack vorgelegt und anschließend das jeweilige Additiv unter Rühren mit dem Dispermat CV (Zahnscheibe d = 2,5 cm bei 1000 U/min.) eingearbeitet. Nach erfolgter Zugabe wird noch 1 Minute weitergerührt. Es wurde dabei in allen Fällen eine Dosierung gewählt, welche 0,4 Gew.-% der Harnstoffkomponente A (bezogen auf die gesamte Masse der Formulierung) entspricht. Anschließend lässt man die Proben 1 Tag bei RT stehen und beurteilt anschließend zunächst visuell die Gelstärke als Maß für die rheologische Wirksamkeit und die Verträglichkeit des Additivs anhand der Trübung. Danach erfolgt die Prüfung des Standvermögens als Maß der rheologischen Wirksamkeit unter Applikationsbedingungen. Hierzu wird die Probe mit dem Spatel gleichmäßig durchgerührt und dann mit der Stufenrakel 30-300 µm und einer automatischen Aufziehbank von BYK Gardner bei einer Geschwindigkeit von 5 cm/s auf Kontrastkarten appliziert. Nach der Applikation werden die Kontrastkarten direkt horizontal zur Trocknung aufgehängt. Nach der Trocknung wird die Schichtdicke in µm (nass) bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit. "Nass" bezieht sich auf die ursprüngliche Nassschichtdicke nach Auftrag mit der Rakel vor der Trocknung.

### Formulierung des Klarlacks:

### Setalux D A 870 BA - Klarlack

| | |
|---|---|
| Setalux D A 870 BA | 80,0 |
| Butylacetat | 9,9 |
| Dowanol PMA | 9,9 |
| BYK-066 | 0,2 |
| | 100,0 |

### Ergebnisse:

| **Produkt** | **Komponente** | **Gelstärke** | **Trübung** | **Standvermögen µm nass** |
|---|---|---|---|---|
| Nullprobe ohne Additiv | - | 5 | 1 | 30 |
| Vergleich V1 | NEP | 1-2 | 2 | 120 |
| Vergleich V3 | NMP | 2 | 2 | 90 |
| Beispiel a2 | Benzyl pyrrol idon | 1 | 2 | 150 |

In der Tabelle ist erkennbar, dass die Vergleichsbeispiele V1 und V3 eine schlechtere Gelstärke aufbauen als das erfindungsgemäße Beispiel a2. Dies äußert sich auch im entsprechend schlechteren Standvermögen der Vergleichsbeispiele im Vergleich zum erfindungsgemäßen Produkt.

### Prüfsystem 2: Setalux D A 870 BA / Desmodur N3390 Weißlack

Für diese Prüfung werden - falls erforderlich - durch Zugabe einer weiteren Menge der jeweiligen Amidverbindung zur Komposition für alle geprüften Produkte ein Gehalt der Harnstoffverbindung von 23 Gew.-% in der Additivkomposition eingestellt. In einer 100 ml-Glasflasche werden 50 g Setalux D A 870 BA Weißlack vorgelegt und anschließend das jeweilige Additiv unter Rühren mit dem Dispermat CV (Zahnscheibe d = 2,5 cm bei 1000 U/min.) eingearbeitet. Es wurde dabei in allen Fällen eine Dosierung gewählt, welche 1,0 Gew.-% der Harnstoffkomponente A (bezogen auf die gesamte Masse der Lackformulierung) entspricht.
Nach erfolgter Zugabe wird noch 1 Minute weitergerührt. Anschließend lässt man die Proben 1 Tag bei Raumtemperatur stehen und beurteilt nach Einarbeitung des Härters das Standvermögen als Maß der rheologischen Wirksamkeit. Hierzu wird die Probe zunächst 5 min auf einem Rüttler (Fa. Andalok, Modell Nathalie) geschert. Direkt nach der Scherung erfolgt die Applikation mit einem Stufenrakel 50-500 µm und einer automatischen Aufziehbank von BYK Gardner bei einer Geschwindigkeit von 5 cm/s auf Kontrastkarten. Nach der Applikation werden die Kontrastkarten direkt horizontal zur Trocknung aufgehängt. Nach der Trocknung wird die Schichtdicke in µm (nass) bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit nach Scherbelastung.

### Formulierung des Lackes:

| | |
|---|---|
| Setalux D A 870 BA | 23,5 |
| Disperbyk-110 | 1,2 |
| Tronox RKB-4 | 34,0 |
| n-Butylacetat | 8,5 |
| Dowanol PMA | 8,5 |

Dispermat CV, Glasperlen 1 mm 1:1, 30 min. bei 40°C, 8000 rpm, 4cm Teflonscheibe

| | |
|---|---|
| Setalux D A 870 BA | 24,0 |
| BYK-306 | 0,3 |
| | 100,0 |
| | |
| Desmodur N3390 | 25,0 |

### Ergebnisse:

| **Produkt** | **Lösemittel** | **Standvermögen/ µm nass (nach Scherung)** |
|---|---|---|
| Nullprobe ohne Additiv | - | 30 |
| Vergleichsbeispiel V3 | NMP | 210 |
| Vergleichsbeispiel V2 | Dimethylsulfoxid | 210 |
| Beispiel a6 | Agnique AMD810 | 270 |

In der Tabelle ist erkennbar, dass die Vergleichsbeispiele V2 und V3 ein schlechteres Standvermögen ermöglichen als das erfindungsgemäße Produkt.

### Prüfsystem 3: Viskositätsmessung an einem Weißlack

Für diese Messung werden - falls erforderlich - durch Zugabe einer weiteren Menge der jeweiligen Amidverbindung zur Komposition für alle geprüften Produkte ein Gehalt der Harnstoffverbindung von 23 Gew.-% in der Additivkomposition eingestellt. In einer 100 ml-Glasflasche werden 50 g Setalux D A 870 BA Weißlack (siehe Prüfsystem 3) vorgelegt und anschließend das jeweilige Additiv unter Rühren mit dem Dispermat CV (Zahnscheibe d = 2,5 cm bei 1000 U/min.) eingearbeitet. Es wurde dabei in allen Fällen eine Dosierung gewählt, welche 1,0 Gew.-% der Harnstoffkomponente A (bezogen auf die gesamte Masse der Lackformulierung) entspricht. Nach erfolgter Zugabe wird noch 1 Minute weitergerührt.
Anschließend lässt man die Proben 1 Tag bei Raumtemperatur stehen und beurteilt dann in einer CSR-Messung (d.h. Messung unter Variation der Scherrate) auf dem Rheometer die Viskosität der Polyol-Komponente im Vergleich zur Nullprobe (ohne Rheologieadditiv). Je höher die Viskosität im niedrigen Scherbereich ist, desto besser ist die rheologische Wirksamkeit des Produktes. Verwendetes Rheometer: Physica MCR-301 von Fa. Anton Paar, Messparameter: CSR-Messung, CP25-1, D= 0,1-1000 1/s, 21 Messpunkte log. Verteilung, Messdauer 105 s, T= 23°C.

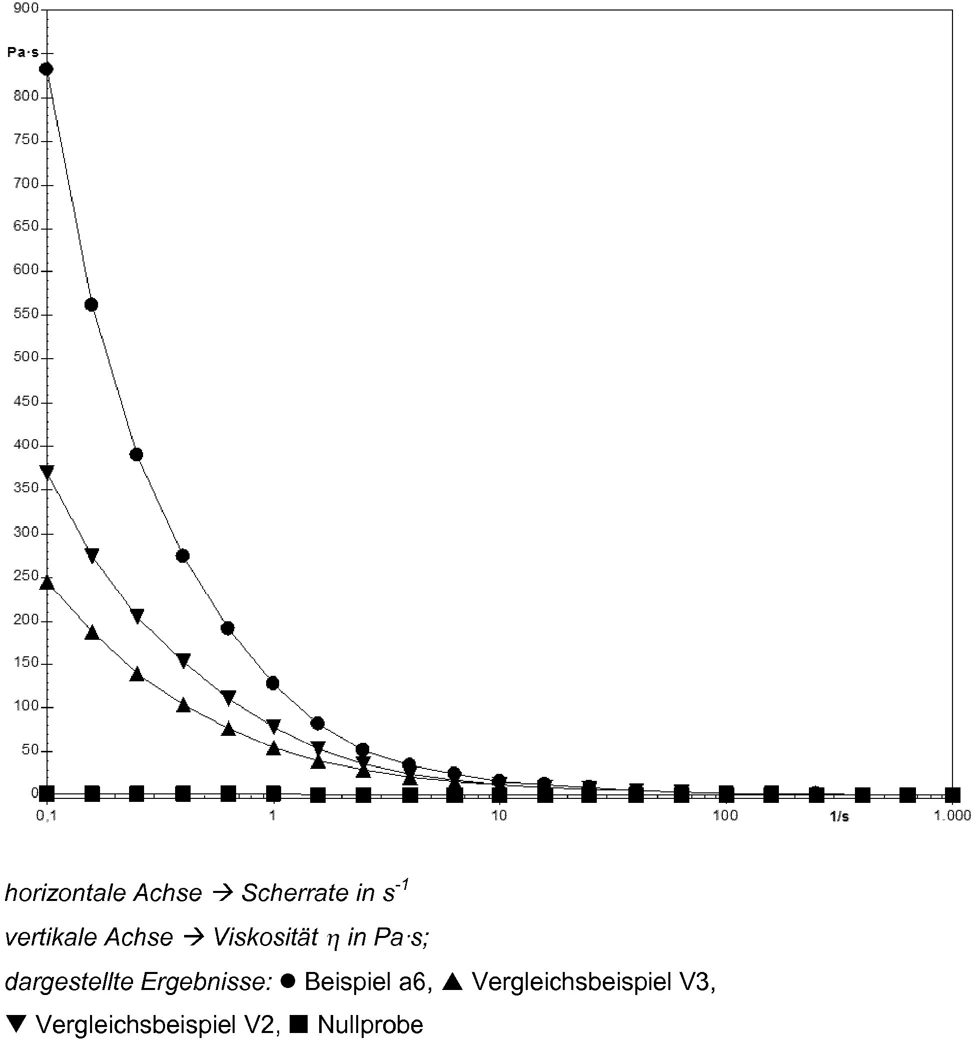

Die obige Viskositätskurve zeigt für das erfindungsgemäße Beispiel a6 einen deutlich stärker ausgeprägten viskositätssteigernden Effekt im Vergleich zu den nicht erfindungsgemäßen Vergleichsbeispielen.

### Prüfsystem 4: Worléekyd S 366 Klarlack

Für diese Prüfserie werden - falls erforderlich - durch Zugabe einer weiteren Menge der jeweiligen Amidverbindung zur Komposition für alle geprüften Produkte ein Gehalt der Harnstoffverbindung von 23 Gew.-% in der Additivkomposition eingestellt. In einer 100 ml-Glasflasche werden 50 g Worleekyd S366 Klarlack vorgelegt und anschließend das jeweiligen Additiv unter Rühren mit dem Dispermat CV (Zahnscheibe d = 2,5 cm bei 1000 U/min.) eingearbeitet. Es wurde dabei in allen Fällen eine Dosierung gewählt, welche 0,5 Gew.-% der Harnstoffkomponente A (bezogen auf die gesamte Masse der Lackformulierung) entspricht. Nach erfolgter Zugabe wird noch 1 Minute weitergerührt. Anschließend lässt man die Proben 1 Tag bei RT stehen und beurteilt dann das Standvermögen als Maß der rheologischen Wirksamkeit unter Applikationsbedingungen. Hierzu wird die Probe mit dem Spatel gleichmäßig durchgerührt und dann mit dem Stufenrakel 30-300 µm und einer automatischen Aufziehbank von BYK Gardner bei einer Geschwindigkeit von 5 cm/s auf Kontrastkarten appliziert. Nach der Applikation werden die Kontrastkarten direkt horizontal zur Trocknung aufgehängt. Nach der Trocknung wird die Schichtdicke in µm nass bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

### Lackformulierung:

| | |
|---|---|
| Worléekyd S 366 60% in Isopar H | 80,9 |
| Isopar H | 16,0 |
| Nuodex Combi APB | 2,6 |
| Borchi Nox M 2 | 0,3 |
| BYK-066 | 0,2 |
| | 100,0 |

### Ergebnisse:

| **Produkt** | **Lösemittel** | **Standvermögen (µm nass)** |
|---|---|---|
| Nullprobe ohne Additiv | - | < 30 |
| Vergleichsbeispiel V4 | NMP | 150 |
| Vergleichsbeispiel V5 | N-Ethylpyrrolidon | 240 |
| Beispiel a12 | N-Octylpyrrolidon | 300 |
| Beispiel a13 | Benzyl pyrrol idon | 300 |

In der Tabelle ist erkennbar, dass die Vergleichsbeispiele V4 und V5 ein schlechteres Standvermögen (d.h. eine geringere maximale Schichtdicke) ermöglichen als die erfindungsgemäßen Produkte.

### Prüfsystem 5: Joncryl SCX8280 / Butylglykol

Für diese Prüfserie werden - falls erforderlich - durch Zugabe einer weiteren Menge der jeweiligen Amidverbindung zur Komposition für alle geprüften Produkte ein Gehalt der Harnstoffverbindung von 38 Gew.-% in der Additivkomposition eingestellt. In einer 100 ml-Glasflasche werden 50 g Joncryl SCX8280 sowie 5% Butylglycol vorgelegt und anschließend das jeweilige Additiv unter Rühren mit dem Dispermat CV (Zahnscheibe d = 2,5 cm bei 1000 U/min) eingearbeitet. Es wurde dabei in allen Fällen eine Dosierung gewählt, welche 0,5 Gew.-% der Harnstoffkomponente A (bezogen auf die gesamte Masse der Lackformulierung) entspricht.
Nach erfolgter Zugabe wird noch 1 Minute weitergerührt. Anschließend lässt man die Proben 1 Tag bei RT stehen und beurteilt dann das Standvermögen als Maß für die rheologische Wirksamkeit unter Applikationsbedingungen. Hierzu wird die Probe mit dem Spatel gleichmäßig durchgerührt und dann mit dem Stufenrakel 30-300 µm und einer automatischen Aufziehbank von BYK Gardner bei einer Geschwindigkeit von 5 cm/s auf Kontrastkarten appliziert. Nach der Applikation werden die Kontrastkarten direkt horizontal zur Trocknung aufgehängt. Nach der Trocknung wird die Schichtdicke in µm nass bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit. Daneben erfolgt nach Trocknung auch eine visuelle Bewertung auf Stippen als Maß für die Verträglichkeit des Additivs in den niedrigen Schichtdicken 30-60 µm.

### Lackformulierung:

| | |
|---|---|
| **Joncryl SCX 8280** | **95,0** |
| **Butylglykol** | **5,0** |
| | **100,0** |

### Ergebnisse:

| **Produkt** | **Lösemittel** | **Standvermögen (µm nass)** | **Stippen (visuell)** |
|---|---|---|---|
| Nullprobe (ohne Lsm.) | | 90 | nein |
| Vergleichsbeispiel V6 | NMP | 150 | nein |
| Vergleichsbeispiel V7 | DMSO | 180 | ja |
| Beispiel a11 | N-Octylpyrrolidon | 210 | nein |

In der Tabelle ist erkennbar, dass die Vergleichsbeispiele V6 und V7 ein schlechteres Standvermögen (d.h. eine geringere maximale Schichtdicke) ermöglichen als die erfindungsgemäßen Produkte. Beim Vergleichsbeispiel V7 zeigte sich zudem eine Stippenneigung.

### Prüfsystem 6: Synthalat W48

Für diese Prüfserie werden - falls erforderlich - durch Zugabe einer weiteren Menge der jeweiligen Amidverbindung zur Komposition für alle geprüften Produkte ein Gehalt der Harnstoffverbindung von 38 Gew.-% in der Additivkomposition eingestellt. In einer 100 ml-Glasflasche werden 50 g Synthalat W48 (Bindemittel) vorgelegt und anschließend das jeweiligen Additiv unter Rühren mit dem Dispermat CV (Zahnscheibe d = 2,5 cm bei 1000 U/min.) eingearbeitet. Es wurde dabei in allen Fällen eine Dosierung gewählt, welche 1,0 Gew.-% der Harnstoffkomponente A (bezogen auf die gesamte Masse an Synthalat W48) entspricht. Nach erfolgter Zugabe wird noch 1 Minute weitergerührt. Anschließend lässt man die Proben 1 Tag bei RT stehen und beurteilt dann das Standvermögen als Maß der rheologischen Wirksamkeit unter Applikationsbedingungen. Hierzu wird die Probe mit dem Spatel gleichmäßig durchgerührt und dann mit dem Stufenrakel 30-300 µm und einer automatischen Aufziehbank von BYK Gardner bei einer Geschwindigkeit von 5cm/s auf Kontrastkarten appliziert. Nach der Applikation werden die Kontrastkarten direkt horizontal zur Trocknung aufgehängt. Nach der Trocknung wird die Schichtdicke in µm nass bestimmt, bei der der Lack nicht abläuft, das heißt keine Läufer oder Wulstbildung erkennbar ist. Je höher der Wert für das Standvermögen bei Einsatz gleicher Wirksubstanz ist, desto besser ist die rheologische Wirksamkeit.

### Ergebnisse:

| **Produkt** | **Lösemittel** | **Standvermögen (µm nass)** |
|---|---|---|
| Nullprobe (ohne Lösemittel) | | 60 |
| Vergleichsbeispiel V7 | Dimethylsulfoxid | 150 |
| Vergleichsbeispiel V8 | NEP | 180 |
| Beispiel a10 | Benzyl pyrrol idon | 210 |

In der Tabelle ist erkennbar, dass die Vergleichsbeispiele V7 und V8 ein schlechteres Standvermögen (d.h. eine geringere maximale Schichtdicke) ermöglichen als das erfindungsgemäße Produkt. Beim Vergleichsbeispiel V7 zeigte sich zudem ein unangenehmer Sulfidgeruch.

### Prüfsystem 7: Antiseparationstest in einem Polyestersystem

In einem 175 ml -PE-Becher werden zunächst die beiden Bindemittelkomponenten Palapreg P 17-02 und Kraton 1118 AS mit dem Dispermat CV 1 min bei 1200 U/min mit einer 4 cm-Zahnscheibe homogenisiert. 50 g dieser Mischung werden anschließend in einem 175 ml PE-Becher vorgelegt und das jeweiligen Additiv unter Rühren mit dem Dispermat CV (Zahnscheibe d = 2,5 cm bei 1000 U/min.) eingearbeitet. Es wurde dabei in allen Fällen eine Dosierung gewählt, welche 1,4 Gew.-% der Harnstoffkomponente A (bezogen auf die gesamte Masse an Palapreg und Kraton) entspricht. Nach erfolgter Zugabe wird noch 2 Minuten weitergerührt. Anschließend füllt man die Proben direkt in 50 ml-Schnappdeckelgläser und lässt sie bei Raumtemperatur stehen. Nach 3 Tagen erfolgt die Beurteilung der Separation der Proben in % bezogen auf die Gesamtfüllhöhe im Schnappdeckelglas, sowie eine visuelle Bewertung der Gelstärke als Maß für die rheologische Wirksamkeit. Je geringer die Höhe der separierten Phase, desto besser ist die rheologische Wirksamkeit des Additivs und desto besser lässt sich dieses folglich gegen die Separation der beiden Komponenten einsetzen.

### Formulierung der Mischung:

| | |
|---|---|
| Palapreg P 17-02 | 70 |
| Kraton 1118 AS | 30 |
| | 100 |

### Ergebnisse:

| **Probe** | **Lösemittel** | **Separation nach 3 d bei RT in % der Füllhöhe** | **Siedepunkt der N-Alkylamid-KomponenteB (°C)** | **Färbung der Mischung** |
|---|---|---|---|---|
| Nullprobe ohne Lösemittel | - | 26 | - | farblos |
| Vergl.-Bsp. V1* | NEP | 4 | 204 +/- 0 (a) | gelbliche Färbung |
| Vergl.-Bsp. V2 | DMSO | 0 | 189 (a) | deutlich gräuliche Verfärbung |
| Beispiel a4 | Pentylpyrrolidon** | 4 | 261 +/- 9 (a) | leichte gelbliche Färbung |
| Beispiel a6 | Agnique AM D810 | 0 | 291 (b) | leichte gelbliche Färbung |
| Beispiel a5 | Hexylpyrrolidon | 0 | 278 +/- 9 (a) | leichte gelbliche Färbung |
| Beispiel a1 | N-Octylpyrrolidon | 0 | 303 (a) | leichte gelbliche Färbung |

| | | | | |
|---|---|---|---|---|
| * Die Komposition von Vergl.-Bsp. V1 wurde durch Zugabe von weiterem N-Ethylpyrrolidon so eingestellt, dass der Gehalt der Harnstoffverbindung in der Additivformulierung 38 Gew.-% betrug ** nicht erfindungsgemäß (a) Quelle: SciFinder / (b) Quelle: Handelsware ist ein Gemisch; angegebener Wert gemäß SciFinder für N,N-Dimethyldecanamid | | | | |

Die Tabelle zeigt, dass die erfindungsgemäßen Beispiele sowohl eine ausgezeichnete Anti-Separationswirkung aufweisen als auch gleichzeitig keinen signifikanten Einfluss auf die Färbung des Gemisches ausüben. Desweiteren erweisen sich die gleichzeitig hohen Siedepunkte der in den erfindungsgemäßen Kompositionen vorliegenden N-Alkylamide als Voraussetzung für einen erfolgreichen Einsatz in entsprechenden ungesättigten Polyester-Systemen: Da diese in der Hitze gehärtet werden (sog. "Closed-Mold"-SMC-Anwendung), sind leichtflüchtige Komponenten unbrauchbar, da diese bei der Härtung zum einen zu ungewollten Emissionen führen und zum anderen durch den Siedeprozess unerwünschte Gasbläschen im fertigen Bauteil entstehen. Die erfindungsgemäßen Beispiele weisen Siedepunkte von über 270°C auf, entsprechende Nachteile sind daher nicht zu erwarten.

### Prüfsystem 8: Lagerstabilität

Zur Prüfung der Lagerstabilität werden 50 ml-Proben der entsprechenden Produkte in verschlossenen Glasflaschen bei Raumtemperatur gelagert. Im 2-monatlichem Abstand wird das Aussehen der Proben visuell beurteilt.

| | **Aussehen nach...** | | | | |
|---|---|---|---|---|---|
| **Produkt** | **Herstellun 9** | **2 Monaten** | **4 Monaten** | **6 Monaten** | **8 Monaten** |
| Vergl.-Bsp. V4 (23%ig) | Klar, flüssig, homogen | Klar, flüssig, homogen | Klar, flüssig, homogen | Trüb, inhomogen, Bodensatz | Trüb, inhomogen, Bodensatz |
| Vergl.-Bsp. V5 (23%ig) | Klar, flüssig, homogen | Klar, flüssig, homogen | Klar, flüssig, homogen | Klar, flüssig, homogen | Trüb, inhomogen, Bodensatz |
| Vergl.-Bsp. V9: in DMSO ca. 23% | Klar, flüssig, homogen; (nach 2 Wochen: trüb) | Trüb, inhomogen, Bodensatz | Trüb, inhomogen, Bodensatz | Trüb, inhomogen, Bodensatz | Trüb, inhomogen, Bodensatz |
| Vergl.-Bsp. V10: 37%-ig in NMP | Klar, flüssig, homogen | Klar, flüssig, homogen | Trüb, inhomogen, Bodensatz | Trüb, inhomogen, Bodensatz | Trüb, inhomogen, Bodensatz |
| Vergl.-Bsp. V11 (23%ig) | Klar, flüssig, homogen | Klar, flüssig, homogen | Klar, flüssig, homogen | Klar, flüssig, homogen | Trüb, inhomogen, Bodensatz |
| Vergl.-Bsp. V12 (37%ig) | Klar, flüssig, homogen | Klar, flüssig, homogen | Klar, flüssig, homogen | Trüb, inhomogen, Bodensatz | Trüb, inhomogen, Bodensatz |
| Beispiel a15 (23%ig) | Klar, flüssig, homogen | Klar, flüssig, homogen | Klar, flüssig, homogen | Klar, flüssig, homogen | Klar, flüssig, homogen |
| Beispiel a16 (37%ig) | Klar, flüssig, homogen | Klar, flüssig, homogen | Klar, flüssig, homogen | Klar, flüssig, homogen | Klar, flüssig, homogen |
| Beispiel a12 (23%ig) | Klar, flüssig, homogen | Klar, flüssig, homogen | Klar, flüssig, homogen | Klar, flüssig, homogen | Klar, flüssig, homogen |
| Beispiel a14(37%ig) | Klar, flüssig, homogen | Klar, flüssig, homogen | Klar, flüssig, homogen | Klar, flüssig, homogen | Klar, flüssig, homogen |

Die Ergebnisse zeigen, dass die erfindungsgemäßen Kompositionen zum einen generell eine bessere Lagerstabilität aufweisen als die nicht erfindungsgemäßen Vergleichsbeispiele. Darüber hinaus ergibt sich der Vorteil, dass eine entsprechende lagerstabile Einphasigkeit auch gegeben ist, wenn ein höherer Anteil der Harnstoffkomponente in der Gesamtkomposition realisiert ist; entsprechende Zusammensetzungsbereiche (höherer Anteil der Harnstoffkomponente A zum Alkylamidverbindung B) sind in den nicht-erfindungsgemäßen, nach dem Stand der Technik bekannten Vergleichsbeispielen gar nicht zugänglich.

## Patentansprüche

1. Harnstoffzubereitung enthaltend
(A) 5 bis 75 Gew.-% einer oder mehrerer Harnstoffkomponenten, die ein Molekulargewicht ≥ 350 g/mol aufweisen sowie mindestens eine Harnstoffgruppe enthalten,
(B) 15 bis 95 Gew.-%, vorzugsweise 30 bis 80 Gew.-% eines oder mehrerer organischer Lösemittel aus der Gruppe der N-Alkylamide, die ein Molekulargewicht von 155 bis 700 g/mol besitzen, frei von Harnstoffgruppen sind und folgende allgemeine Formel (I) besitzen, 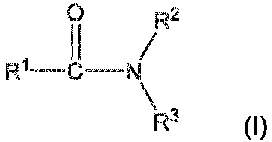 worin
(a) R¹ ein x = 1 bis 24 Kohlenstoffatome enthaltender Kohlenwasser-stoff-Rest,
R² ein y = 1 bis 12 Kohlenstoffatome aufweisender organischer Rest, und
R³ ein z = 1 bis 12 Kohlenstoffatome aufweisender organischer Rest ist,
oder
(b) R¹, R² und R³ wie unter (a) definiert sind, aber R¹ und R² durch eine chemische Bindung miteinander verbunden sind und gemeinsam unter Einbezug der Gruppe C(=O)N einen Ring mit 4 bis 10 Ringatomen ausbilden; und im Falle eines Rings mit
4 oder 5 Ringatomen, bei welchem x+y < 4 ist, der Rest R³ mindestens 6 Kohlenstoffatome und höchstens 11 Kohlenstoffatome enthält
oder
(c) R¹, R² und R³ wie unter (a) definiert sind, aber R² und R³ durch eine chemische Bindung miteinander verbunden sind und gemeinsam unter Einbezug des Stickstoffatoms der allgemeinen Formel (I) einen Ring mit 4 bis 10 Ringatomen ausbilden,
mit der Maßgabe, dass für (a), (b) und (c) jeweils x+y+z ≥ 8 gilt,
(C) 0 bis 35 Gew.-% eines oder mehrerer von (B) verschiedener organischer Lösemittel, die keine Harnstoffgruppe sowie keine ionische Gruppe enthalten sowie maximal zwei Heteroatome ausgewählt aus der Gruppe bestehend aus Stickstoff und Sauerstoff, aufweisen, und
(D) 0 bis 50 Gew.-% eines Salzes, das sich von der oder den Harnstoffkomponenten (A), dem oder den Lösemitteln (B) sowie dem oder den Lösemitteln (C) unterscheidet, und
wobei sich alle gewichtsprozentualen Angaben auf das Gesamtgewicht der Harnstoffzubereitung beziehen.

2. Harnstoffzubereitung gemäß Anspruch 1, enthaltend
(A) 10 bis 65 Gew.-% der Harnstoffkomponente oder Harnstoffkomponenten, die ein gewichtsmittleres Molekulargewicht von 350 bis 60000 g/mol aufweisen sowie mindestens eine Harnstoffgruppe enthalten,
(B) 20 bis 85 Gew.-% des oder der organischen Lösemittel aus der Gruppe der N-Alkylamide, die ein Molekulargewicht von 155 bis 700 g/mol besitzen, frei von Harnstoffgruppen sind und die allgemeine Formel (I) besitzen,
(C) 0 bis 25 Gew.-% des oder der von (B) verschiedenen organischen Lösemittel, die keine Harnstoffgruppe sowie keine ionische Gruppe enthalten sowie maximal zwei Heteroatome ausgewählt aus der Gruppe bestehend aus Stickstoff und Sauerstoff, aufweisen, und
(D) vorzugsweise 0 bis 15 Gew.-% des Salzes, und
wobei sich alle gewichtsprozentualen Angaben auf das Gesamtgewicht der Harnstoffzubereitung beziehen.

3. Harnstoffzubereitung gemäß Anspruch 1 oder 2, wobei es sich bei 50 bis 100 Gew.-% des Lösemittels (B) der allgemeinen Formel (I), bezogen auf das Gesamtgewicht des Lösemittels (B), um ein intermolekulares Amid (B1) handelt, worin
R¹ ein 3 bis 17 Kohlenstoffatome enthaltender, verzweigter oder unverzweigter, gesättigter oder ungesättigter, vorzugsweise gesättigter Kohlenwasserstoff-Rest ist;
R² und R³ jeweils gleich oder verschieden sind und unabhängig voneinander für einen verzweigten oder unverzweigten, gesättigten oder ungesättigten, 1 bis 6, vorzugsweise 1 bis 4 Kohlenstoffatome aufweisenden organischen Rest stehen,
oder
R² und R³ durch eine chemische Bindung miteinander verbunden sind und unter Einbezug des Stickstoffatoms der allgemeinen Formel (I) einen Ring mit 5 bis 7 Ringatomen ausbilden.

4. Harnstoffzubereitung gemäß Anspruch 1 oder 2, wobei es sich bei 50 bis 100 Gew.-% des Lösemittels (B) der allgemeinen Formel (I), bezogen auf das Gesamtgewicht des Lösemittels (B), um ein intramolekulares Amid (B2) handelt, worin
R¹ und R² durch eine chemische Bindung miteinander verbunden sind und unter Einbezug der Gruppe C(=O)N einen Ring mit 4 bis 8 Ringatomen ausbilden, wobei gegebenenfalls ein oder mehrere Ringkohlenstoffatome mit einem C₁-C₄-Alkylrest substituiert sind.

5. Harnstoffzubereitungen gemäß einem der Ansprüche 1 bis 4, worin 70 bis 100 Gew.-% der Harntoffkomponente (A), bezogen auf das Gesamtgewicht der Harnstoffkomponenten (A), entweder mindestens zwei Harnstoffgruppen oder mindestens eine Harnstoffgruppe und mindestens eine Urethangruppen, vorzugsweise mindestens zwei Harnstoffgruppen und zwei Urethangruppen aufweisen.

6. Harnstoffzubereitungen gemäß einem der Ansprüche 1 bis 5, wobei
(i) 50 bis 100 Gew.-% der Harnstoffkomponente (A), bezogen auf das Gesamtgewicht der Harnstoffkomponenten (A), gemäß der allgemeinen Formel (II)
R³¹-[R³³-Z-R³⁴-W-]ₙR³² (II)
vorliegen, worin
R³¹ und R³² jeweils gleich oder verschieden sind sowie jeweils unabhängig voneinander für einen verzweigten oder unverzweigten, gesättigten oder ungesättigten 1 bis 100 Kohlenstoffatome enthaltenden organischen Rest stehen, der maximal jeweils eine Harnstoffgruppe und maximal jeweils eine Urethangruppe aufweist,
R³³ und R³⁴ jeweils gleich oder verschieden sind sowie jeweils unabhängig voneinander für 1 bis 300 Kohlenstoffatome enthaltende, optional Ethergruppen enthaltende verzweigte oder unverzweigte Polyesterreste, für 2 bis 300 Kohlenstoffatome enthaltende verzweigte oder unverzweigte Polyetherreste, für 1 bis 300 Kohlenstoffatome enthaltende verzweigte oder unverzweigte Polyamidreste, für 3 bis 100 Siliziumatome enthaltende Polysiloxanreste, für verzweigte oder unverzweigte C₂-C₂₂-Alkylenreste, verzweigte oder unverzweigte C₃-C₁₈-Alkenylenreste, C₅-C₁₂-Arylenreste und/oder verzweigte oder unverzweigte C₇-C₂₂ Arylalkylenreste stehen,
Z und W jeweils gleich oder verschieden sind sowie jeweils unabhängig voneinander für NH-CO-O und/oder NH-CO-NH stehen, und
n für eine ganze Zahl von 1 bis 150, bevorzugt von 2 bis 120 steht;
oder
(ii) 50 bis 100 Gew.-% der Harnstoffkomponente (A), bezogen auf das Gesamtgewicht der Harnstoffkomponenten (A), jeweils ein gewichtsmittleres Molekulargewicht von 2000 bis 55000 g/mol aufweisen und 4 bis 150 Harnstoffgruppen enthalten;
oder
(iii) 50 bis 100 Gew.-% der Harnstoffkomponente (A), bezogen auf das Gesamtgewicht der Harnstoffkomponenten (A), jeweils gemäß einer oder mehrerer der allgemeinen Formeln ausgewählt aus der Gruppe bestehend aus (IIIa), (IIIb), (IIIc) und (IIId) 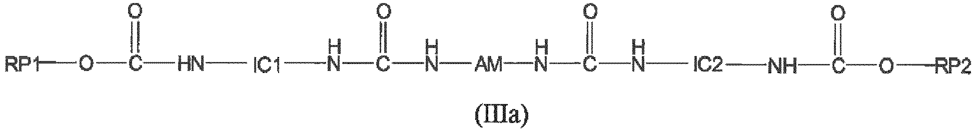 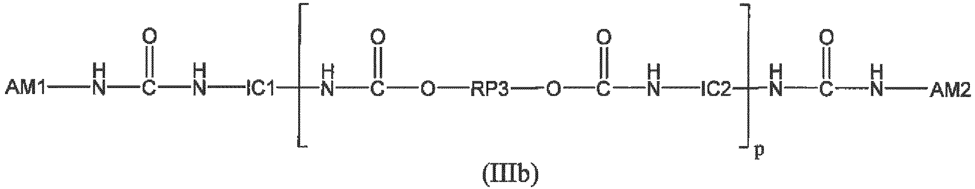 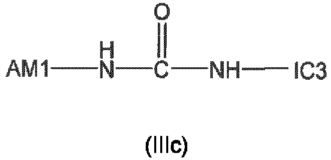 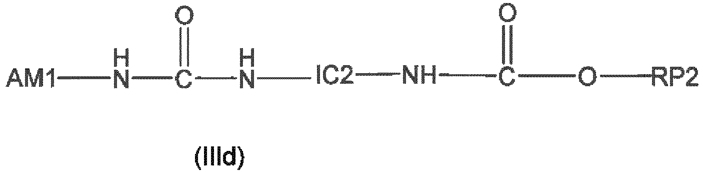 vorliegen, worin
AM für einen linearen oder verzweigten, gesättigten oder ungesättigten, aliphatischen, aromatischen oder aliphatisch-aromatischen organischen Rest mit 2 bis 50 Kohlenstoffatomen steht,
AM1 sowie AM2 jeweils gleich oder verschieden sind sowie jeweils unabhängig voneinander für einen linearen oder verzweigten, gesättigten oder ungesättigten, aliphatischen, aromatischen oder aliphatisch-aromatischen organischen Rest mit 1 bis 50 Kohlenstoffatomen stehen, wobei dieser organische Rest auch weitere funktionelle Gruppen wie Hydroxylgruppen oder Aminogruppen auf
weisen kann,
IC1 sowie IC2 jeweils gleich oder verschieden sind sowie jeweils unabhängig voneinander für einen linearen oder verzweigten, gesättigten oder ungesättigten, aliphatischen, aromatischen oder aliphatisch-aromatischen Kohlenwasserstoffrest mit 2 bis 40 Kohlenstoffatomen stehen,
IC3 für einen linearen oder verzweigten, gesättigten oder ungesättigten, aliphatischen, aromatischen oder aliphatisch-aromatischen Kohlenwasserstoffrest mit 2 bis 24 Kohlenstoffatomen steht,
RP1 sowie RP2 jeweils gleich oder verschieden sind sowie jeweils unabhängig voneinander für einen linearen oder verzweigten, gesättigten oder ungesättigten, aliphatischen, aromatischen oder aliphatisch-aromatischen organischen Rest mit 1 bis 24 Kohlenstoffatomen und/oder für einen Polyetherrest mit 1 bis 120 Ethersauerstoffatomen und/oder für einen optional Ethergruppen enthaltenden Polyesterrest mit 1 bis 100 Estergruppen und/oder für einen Polyamidrest mit 1 bis 100 Amidgruppen und/oder für einen Polysiloxanrest mit 3 bis 100 Siliziumatomen stehen,
RP3 gleich oder verschieden sind sowie für einen linearen oder verzweigten, gesättigten oder ungesättigten, aliphatischen, aromatischen oder aliphatisch-aromatischen Kohlenwasserstoffrest mit 2 bis 24 Kohlenstoffatomen und/oder für einen (Poly)etherrest mit 1 bis 120 Ethersauerstoffatomen und/oder für einen Polyamidrest mit 1 bis 100 Amidgruppen und/oder für einen Polysiloxanrest mit 3 bis 100 Siliziumatomen und/oder für einen optional Ethergruppen enthaltender Polyesterrest mit 1 bis 100 Estergruppen steht und p für 0 oder 1 steht.

7. Harnstoffzubereitungen gemäß einem der Ansprüche 1 bis 6, wobei 70 bis 100 Gew.-% der Harnstoffkomponente (A), bezogen auf das Gesamtgewicht der Hamstoffkomponenten (A), jeweils durch Umsetzung von durch Isocyanurat- und/oder Uretdionbildung oligomerisierten Isocyanaten mit monofunktionellen Aminen erhalten werden.

8. Harnstoffzubereitungen gemäß einem oder mehreren der Ansprüche 1 bis 7, wobei 95 bis 100 Gew.-%, bezogen auf das Gesamtgewicht der Harnstoffkomponenten (A), jeweils mindestens
ein Molekülsegment der allgemeinen Formel (IVa)
-O-CO-NH-Y₁NH-CO-NH- (IVa)
worin
Y₁ für einen 4 bis 20, vorzugsweise 5 bis 18, besonders bevorzugt 6 bis 13 Kohlenstoffatome enthaltenden gesättigten oder ungesättigten, verzweigten oder unverzweigten Kohlenwasserstoffrest steht,
und jeweils kein Molekülsegment der allgemeinen Formel (IVb)
-O-CO-NH-Y₂-NH-CO-O- (IVb)
worin
Y₂ für einen 4 bis 20, vorzugsweise 5 bis 18, besonders bevorzugt 6 bis 13 Kohlenstoffatome enthaltenden gesättigten oder ungesättigten, verzweigten oder unverzweigten Kohlenwasserstoffrest steht, aufweisen.

9. Harnstoffzubereitungen gemäß einem oder mehreren der Ansprüche 1 bis 8, wobei das Lösemittel (C) gewählt ist aus der Gruppe bestehend aus aliphatischen Kohlenwasserstoffen, cycloaliphatischen Kohlenwasserstoffen, Terpenen, Terpenoiden, aromatischen Kohlenwasserstoffen, Chlorkohlenwasserstoffen, Alkoholen, Ketonen, Estern, Glykolethern, Ethern, Amiden, Sulfoxiden, Sulfonen, Acetalen und Nitroalkanen.

10. Harnstoffzubereitungen gemäß einem oder mehreren der Ansprüche 1 bis 9, wobei das Salz (D) gewählt ist aus der Gruppe bestehend aus (i) ionischen Flüssigkeiten und/oder (ii) Alkalimetallsalzen, Erdalkalimetallsalz und/oder Ammoniumsalzen, mit einwertigen Anionen, aus der Gruppe bestehend aus Halogeniden, Pseudohalogeniden, Formiaten, Acetaten und/oder Nitraten.

11. Harnstoffzubereitungen gemäß einem oder mehreren der Ansprüche 1 bis 10, wobei diese bestehen aus (A) und (B); oder aus (A), (B) und (C); oder aus (A), (B) und (D).

12. Verwendung der Harnstoffzubereitungen nach Ansprüchen 1 bis 11 als Rheologiehilfsmittel für flüssige Medien.

13. Verwendung nach Anspruch 12, wobei es sich beim Rheologiehilfsmittel um ein Verdickungsmittel und/oder ein Thixotropiermittel handelt.

14. Flüssiges Medium umfassend eine Harnstoffzubereitung gemäß einem oder mehreren der Ansprüche 1 bis 11.

15. Flüssiges Medium, gemäß Anspruch 14, wobei das flüssige Medium gewählt ist aus der Gruppe bestehend aus Lacken, Druckfarben, Tinten, Pigmentpasten, Kunststoff-Formulierungen, Kosmetikzubereitungen, Baustoff-Formulierungen, Keramikformulierungen, Schmierstoffen, Vergussmassen, Dichtstoffen, Sprühmitteln, Klebstoffen und Formulierungen, die bei der Erdgas- und Erdölförderung eingesetzt werden.

## Claims

1. A urea preparation comprising
(A) 5% to 75% by weight of one or more urea components having a molecular weight of ≥ 350 g/mol and containing at least one urea group,
(B) 15% to 95% by weight, preferably 30% to 80% by weight, of one or more organic solvents from the group of the N-alkylamides which have a molecular weight of 155 to 700 g/mol, are free of urea groups and have the following general formula (I) : 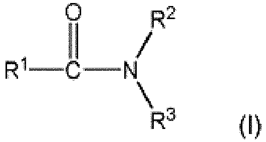 in which
(a) R¹ is a hydrocarbyl radical containing x = 1 to 24 carbon atoms,
R² is an organic radical containing y = 1 to 12 carbon atoms, and
R³ is an organic radical containing z = 1 to 12 carbon atoms,
or
(b) R¹, R² and R³ are as defined under (a), but R¹ and R² are bonded to one another by a chemical bond and together, with inclusion of the C(=O)N group, form a ring having 4 to 10 ring atoms; and, in the case of a ring having 4 or 5 ring atoms in which x + y < 4, the R³ radical contains at least 6 carbon atoms and at most 11 carbon atoms
or
(c) R¹, R² and R³ are as defined under (a), but R² and R³ are bonded to one another by a chemical bond and together, with inclusion of the nitrogen atom in the general formula (I), form a ring having 4 to 10 ring atoms,
with the proviso that, for each of (a), (b) and (c), x + y + z ≥ 8,
(C) 0% to 35% by weight of one or more organic solvents other than (B) which do not contain any urea group or any ionic group and have a maximum of two heteroatoms selected from the group consisting of nitrogen and oxygen, and
(D) 0% to 50% by weight of a salt which differs from the urea component (s) (A), the solvent (s) (B) and the solvent(s) (C), and
where all percent by weight figures are based on the total weight of the urea preparation.

2. The urea preparation as claimed in claim 1, comprising
(A) 10% to 65% by weight of the urea component (s) having a weight-average molecular weight of 350 to 60 000 g/mol and containing at least one urea group,
(B) 20% to 85% by weight of the organic solvent (s) from the group of the N-alkylamides having a molecular weight of 155 to 700 g/mol, being free of urea groups and having the general formula (I),
(C) 0% to 25% by weight of the organic solvent (s) other than (B) which do not contain any urea group or any ionic group and have a maximum of two heteroatoms selected from the group consisting of nitrogen and oxygen, and
(D) preferably 0% to 15% by weight of the salt, and
where all percent by weight figures are based on the total weight of the urea preparation.

3. The urea preparation as claimed in claim 1 or 2, wherein 50% to 100% by weight of the solvent (B) of the general formula (I), based on the total weight of the solvent (B), is an intermolecular amide (B1) in which
R¹ is a branched or unbranched, saturated or unsaturated, preferably saturated, hydrocarbyl radical containing 3 to 17 carbon atoms;
R² and R³ in each case are the same or different and are independently a branched or unbranched, saturated or unsaturated organic radical having 1 to 6, preferably 1 to 4, carbon atoms,
or
R² and R³ are joined to one another by a chemical bond and, with inclusion of the nitrogen atom in the general formula (I), form a ring having 5 to 7 ring atoms.

4. The urea preparation as claimed in claim 1 or 2, wherein 50% to 100% by weight of the solvent (B) of the general formula (I), based on the total weight of the solvent (B), is an intramolecular amide (B2) in which
R¹ and R² are joined to one another by a chemical bond and, with inclusion of the C(=O)N group, form a ring having 4 to 8 ring atoms, where one or more ring carbon atoms are optionally substituted by a C₁-C₄-alkyl radical.

5. The urea preparations as claimed in any of claims 1 to 4, in which 70% to 100% by weight of the urea component (A), based on the total weight of the urea components (A), has either at least two urea groups or at least one urea group and at least one urethane group, preferably at least two urea groups and two urethane groups.

6. The urea preparations as claimed in any of claims 1 5, wherein
(i) 50% to 100% by weight of the urea component (A), based on the total weight of the urea components (A), of the general formula(II)
R³¹-[R³³-Z-R³⁴-W-]ₙR³² (II)
is present, in which
R³¹ and R³² in each case are the same or different and are each independently a branched or unbranched, saturated or unsaturated organic radical which contains 1 to 100 carbon atoms and has a maximum of one urea group in each case and a maximum of one urethane group in each case,
R³³ and R³⁴ in each case are the same or different and are each independently branched or unbranched polyester radicals containing 1 to 300 carbon atoms and optionally containing ether groups, branched or unbranched polyether radicals containing 2 to 300 carbon atoms, branched or unbranched polyamide radicals containing 1 to 300 carbon atoms, polysiloxane radicals containing 3 to 100 silicon atoms, branched or unbranched C₂-C₂₂-alkylene radicals, branched or unbranched C₃-C₁₈-alkenylene radicals, C₅-C₁₂-arylene radicals and/or unbranched or unbranched C₇-C₂₂-arylalkylene radicals,
Z and W in each case are the same or different and are each independently NH-CO-O and/or NH-CO-NH, and
n is an integer from 1 to 150, preferably from 2 to 120;
or
(ii) 50% to 100% by weight of the urea component (A), based on the total weight of the urea components (A), in each case has a weight-average molecular weight of 2000 to 55 000 g/mol and contains 4 to 150 urea groups;
or
(iii) 50% to 100% by weight of the urea component (A), based on the total weight of the urea components (A), in each case of one or more of the general formulae selected from the group consisting of (IIIa), (IIIb), (IIIc) and (IIId) 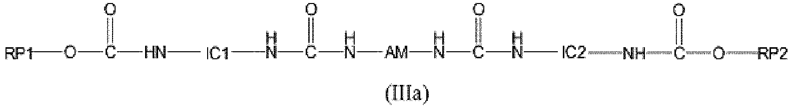 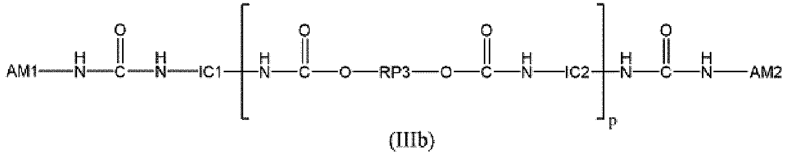 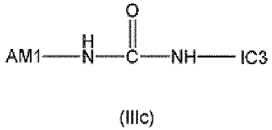 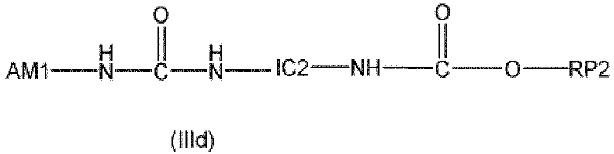 is present, in which
AM is a linear or branched, saturated or unsaturated, aliphatic, aromatic or aliphatic-aromatic organic radical having 2 to 50 carbon atoms,
AM1 and AM2 in each case are the same or different and are each independently a linear or branched, saturated or unsaturated, aliphatic, aromatic or aliphatic-aromatic organic radical having 1 to 50 carbon atoms, where this organic radical may also have further functional groups such as hydroxyl groups or amino groups,
IC1 and IC2 in each case are the same or different and are each independently a linear or branched, saturated or unsaturated, aliphatic, aromatic or aliphatic-aromatic hydrocarbyl radical having 2 to 40 carbon atoms,
IC3 is a linear or branched, saturated or unsaturated, aliphatic, aromatic or aliphatic-aromatic hydrocarbyl radical having 2 to 24 carbon atoms,
RP1 and RP2 in each case are the same or different and are each independently a linear or branched, saturated or unsaturated, aliphatic, aromatic or aliphatic-aromatic organic radical having 1 to 24 carbon atoms and/or a polyether radical having 1 to 120 ether oxygen atoms and/or a polyester radical having 1 to 100 ester groups and optionally containing ether groups and/or a polyamide radical having 1 to 100 amide groups and/or a polysiloxane radical having 3 to 100 silicon atoms,
RP3 are the same or different and are a linear or branched, saturated or unsaturated, aliphatic, aromatic or aliphatic-aromatic hydrocarbyl radical having 2 to 24 carbon atoms and/or a (poly)ether radical having 1 to 120 ether oxygen atoms and/or a polyamide radical having 1 to 100 amide groups and/or a polysiloxane radical having 3 to 100 silicon atoms and/or a polyester radical having 1 to 100 ester groups and optionally containing ether groups and
p is 0 or 1.

7. The urea preparations as claimed in any of claims 1 to 6, wherein 70% to 100% by weight of the urea component (A), based on the total weight of the urea components (A), is obtained in each case by reaction of isocyanates oligomerized by isocyanurate and/or uretdione formation with monofunctional amines.

8. The urea preparations as claimed in one or more of claims 1 to 7, wherein 95% to 100% by weight, based on the total weight of the urea components (A), in each case has at least
one molecular segment of the general formula (IVa)
-O-CO-NH-Y₁-NH-CO-NH- (IVa)
in which
Y₁ is a saturated or unsaturated, branched or unbranched hydrocarbyl radical containing 4 to 20, preferably 5 to 18, more preferably 6 to 13, carbon atoms,
and in each case no molecular segment of the general formula (IVb)
-O-CO-NH-Y₂-NH-CO-O- (IVb)
in which
Y₂ is a saturated or unsaturated, branched or unbranched hydrocarbyl radical containing 4 to 20, preferably 5 to 18, more preferably 6 to 13, carbon atoms.

9. The urea preparations as claimed in one or more of claims 1 to 8, wherein the solvent (C) is selected from the group consisting of aliphatic hydrocarbons, cycloaliphatic hydrocarbons, terpenes, terpenoids, aromatic hydrocarbons, hydrochlorocarbons, alcohols, ketones, esters, glycol ethers, ethers, amides, sulfoxides, sulfones, acetals and nitroalkanes.

10. The urea preparations as claimed in one or more of claims 1 to 9, wherein the salt (D) is selected from the group consisting of (i) ionic liquids and/or (ii) alkali metal salts, alkaline earth metal salt and/or ammonium salts, with monovalent anions from the group consisting of halides, pseudohalides, formates, acetates and/or nitrates.

11. The urea preparations as claimed in one or more of claims 1 to 15, wherein these consist of (A) and (B); or of (A), (B) and (C); or of (A), (B) and (D).

12. The use of the urea preparations as claimed in claims 1 to 11 as rheology aid for liquid media.

13. The use as claimed in claim 12, wherein the rheology aid is a thickener and/or a thixotropic agent.

14. A liquid medium comprising a urea preparation as claimed in one or more of claims 1 to 11.

15. The liquid medium corresponding to claim 14, wherein the liquid medium is selected from the group consisting of varnishes, printing inks, other inks, pigment pastes, polymer formulations, cosmetic preparations, construction material formulations, ceramic formulations, lubricants, potting compounds, sealants, spraying agents, adhesives and formulations that are used in natural gas and mineral oil production.

## Revendications

1. Préparation d'urée, contenant
(A) 5 à 75 % en poids d'un ou plusieurs composants d'urée qui présentent un poids moléculaire ≥ 350 g/mol, et contiennent au moins un groupe urée,
(B) 15 à 95 % en poids, de préférence 30 à 80 % en poids, d'un ou plusieurs solvants organiques du groupe des N-alkylamides ayant un poids moléculaire de 155 à 700 g/mol qui sont exempts de groupes urée et présentent la formule générale (I) suivante, 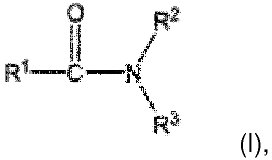 dans laquelle
(a) R¹ est un radical hydrocarbure contenant x = 1 à 24 atomes de carbone,
R² est un radical organique avec y = 1 à 12 atomes de carbone, et
R³ est un radical organique avec z = 1 à 12 atomes de carbone, ou
(b) R¹, R² et R3 sont tels que définis sous (a), mais R¹ et R² sont liés l'un à l'autre par une liaison chimique, et ensemble forment, par inclusion du groupe C(=O)N, un cycle avec 4 à 10 atomes de cycle; et dans le cas d'un cycle avec 4 ou 5 atomes de cycle, dans lequel x + y < 4, le radical R³ contient au moins 6 atomes de carbone et au plus 11 atomes de carbone, ou
(c) R¹, R² et R³ sont tels que définis sous (a), mais R² et R³ sont liés l'un à l'autre par une liaison chimique, et ensemble forment, par inclusion de l'atome d'azote de la formule générale (I), un cycle avec 4 à 10 atomes de cycle,
à condition que x + y + z ≥ 8, respectivement pour (a), (b) et (c),
(C) 0 à 35 % en poids d'un ou plusieurs solvants organiques différents de (B) qui ne contiennent pas de groupe urée et pas de groupe ionique, et qui présentent au plus deux hétéroatomes choisis dans le groupe consistant en l'azote et l'oxygène, et
(D) 0 à 50 % en poids d'un sel différent du ou des composants d'urée (A), du ou des solvants (B) et du ou des solvants (C),
où tous les pourcentages en poids se rapportent au poids total de la préparation d'urée.

2. Préparation d'urée selon la revendication 1, contenant
(A) 10 à 65 % en poids du composant d'urée ou des composants d'urée qui présentent un poids moléculaire moyen en poids de 350 à 60000 g/mol, et contiennent au moins un groupe urée,
(B) 20 à 85 % en poids du ou des solvants organiques du groupe des N-alkylamides qui présentent un poids moléculaire de 155 à 700 g/mol, sont exempts de groupes urée et présentent la formule générale (I),
(C) 0 à 25 % en poids du ou des solvants organiques différents de (B) qui ne contiennent pas de groupe urée et pas de groupe ionique, et qui présentent au plus deux hétéroatomes choisis dans le groupe consistant en l'azote et l'oxygène, et
(D) de préférence 0 à 15 % du sel, et
où tous les pourcentages en poids se rapportent au poids total de la préparation d'urée.

3. Préparation d'urée selon la revendication 1 ou 2, dans laquelle les 50 à 100 % en poids du solvant (B) de la formule générale (I) par rapport au poids total du solvant (B) sont un amide intermoléculaire (B1), où
R¹ est un radical hydrocarbure ramifié ou non ramifié, saturé ou non saturé, de préférence saturé, avec 3 à 17 atomes de carbone;
R² et R³ respectivement sont identiques ou différents et, indépendamment l'un de l'autre, représentent un radical organique ramifié ou non ramifié, saturé ou insaturé avec 1 à 6 atomes de carbone, de préférence 1 à 4 atomes de carbone,
ou
R² et R³ sont liés l'un à l'autre par une liaison chimique, et ensemble forment, par inclusion de l'atome d'azote de la formule générale (I), un cycle avec 5 à 7 atomes de cycle.

4. Préparation d'urée selon la revendication 1 ou 2, dans laquelle les 50 à 100 % en poids du solvant (B) de la formule générale (I) par rapport au poids total du solvant (B) sont un amide intramoléculaire (B2), où R¹ et R² sont liés l'un à l'autre par une liaison chimique, et ensemble forment, par inclusion du groupe C(=O)N, un cycle avec 4 à 8 atomes de cycle, où le cas échéant un ou plusieurs des atomes de carbone du cycle sont substitués par un radical alkyle en C₁-C₄.

5. Préparations d'urée selon l'une quelconque des revendications 1 à 4, dans laquelle 70 à 100 % en poids du composant d'urée (A), par rapport au poids total des composants d'urée (A), présentent soit au moins deux groupes urée soit au moins un groupe urée et au moins un groupe uréthane, de préférence au moins deux groupes urée et deux groupes uréthane.

6. Préparations d'urée selon l'une quelconque des revendications 1 à 5, dans lesquelles
(i) 50 à 100 % en poids du composant d'urée (A), par rapport au poids total des composants d'urée (A), sont présents selon la formule générale (II)
R³¹-[R³³-Z-R³⁴-W-]ₙR³² (II),
où
R³¹ et R³² respectivement sont identiques ou différents et, en chaque cas indépendamment l'un de l'autre, représentent un radical organique ramifié ou non ramifié, saturé ou insaturé et contenant 1 à 100 atomes de carbone qui respectivement contient au plus un groupe urée et au plus un groupe uréthane,
R³³ et R³⁴ respectivement sont identiques ou différents et, indépendamment l'un de l'autre, représentent des radicaux polyester ramifiés ou non ramifiés avec 1 à 300 atomes de carbone et optionnellement contenant des groupes éther, des radicaux polyéther ramifiés ou non ramifiés avec 2 à 300 atomes de carbone, des radicaux polyamide ramifiés ou non ramifiés avec 1 à 300 atomes de carbone, des radicaux polysiloxane ramifiés ou non ramifiés avec 3 à 100 atomes de silicium, des radicaux alkylène en C₂-C₂₂ ramifiés ou non ramifiés, des radicaux alcénylène en C₃-C₁₈ ramifiés ou non ramifiés, des radicaux arylène en C₅-C₁₂, et/ou des radicaux arylalkylène en C₇-C₂₂ ramifiés ou non ramifiés,
Z et W respectivement sont identiques ou différents et, indépendamment l'un de l'autre, représentent NH-CO-O et/ou NH-CO-NH, et
n représente un nombre entier de 1 à 150, de préférence de 2 à 120;
ou
(ii) 50 à 100 % en poids du composant d'urée (A), par rapport au poids total des composants d'urée (A), respectivement présentent un poids moléculaire moyen en poids de 2000 à 55000 g/mol et contiennent 4 à 150 groupes urée ;
ou
(iii) 50 à 100 % en poids du composant d'urée (A), par rapport au poids total du composant d'urée (A), respectivement sont présents selon une ou plusieurs des formules générales choisies dans le groupe consistant en (IIIa), (IIIb), (IIIc) et (IIId), 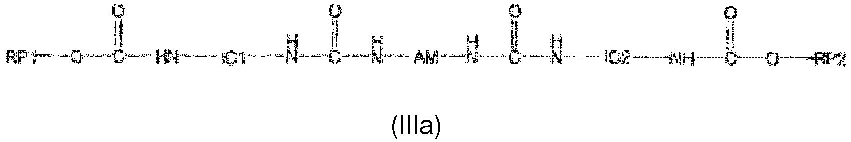 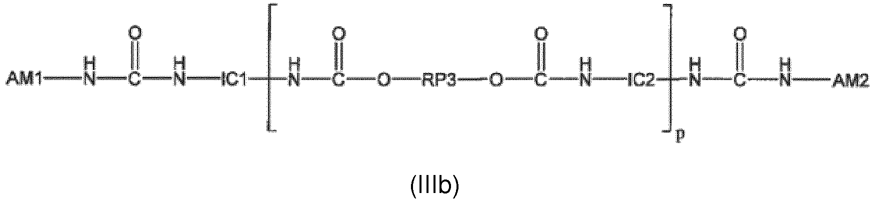 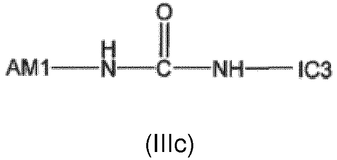 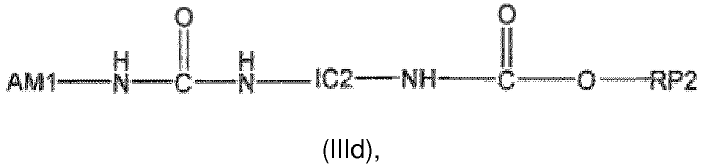 où
AM représente un radical organique linéaire ou ramifié, saturé ou non saturé, aliphatique, aromatique ou aliphatique-aromatique avec 2 à 50 atomes de carbone,
AM1 et AM2 respectivement sont identiques ou différents et, en chaque cas indépendamment l'un de l'autre, représentent un radical organique linéaire ou ramifié, saturé ou non saturé, aliphatique, aromatique ou aliphatique-aromatique avec 1 à 50 atomes de carbone, où ce radical organique peut aussi présenter autres groupes fonctionnels comme les groupes hydroxyle ou les groupes amine,
IC1 et IC2 respectivement sont identiques ou différents et, en chaque cas indépendamment l'un de l'autre, représentent un radical organique linéaire ou ramifié, saturé ou non saturé, aliphatique, aromatique ou aliphatique-aromatique avec 2 à 40 atomes de carbone,
IC3 représente un radical organique linéaire ou ramifié, saturé ou non saturé, aliphatique, aromatique ou aliphatique-aromatique avec 2 à 24 atomes de carbone,
RP1 et RP2 respectivement sont identiques ou différents et, en chaque cas indépendamment l'un de l'autre, représentent un radical organique linéaire ou ramifié, saturé ou non saturé, aliphatique, aromatique ou aliphatique-aromatique avec 1 à 24 atomes de carbone, et/ou un radical polyéther avec 1 à 120 atomes d'oxygène d'éther, et/ou un radical polyester avec 1 à 100 groupes ester et optionnellement contenant des groupes éther, et/ou un radical polyamide avec 1 à 100 groupes amide, et/ou un radical polysiloxane avec 3 à 100 atomes de silicium,
RP3 respectivement est identique ou différent et représente un radical organique linéaire ou ramifié, saturé ou non saturé, aliphatique, aromatique ou aliphatique-aromatique avec 2 à 24 atomes de carbone, et/ou un radical (poly)éther avec 1 à 120 atomes d'oxygène d'éther, et/ou un radical polyamide avec 1 à 100 groupes amide, et/ou un radical polysiloxane avec 3 à 100 atomes de silicium, et/ou un radical polyester avec 1 à 100 groupes ester et optionnellement contenant des groupes éther, et
p représente 0 ou 1.

7. Préparations d'urée selon l'une quelconque des revendications 1 à 6, dans lesquelles 70 à 100 % en poids du composant d'urée (A), par rapport au poids total des composants d'urée (A), sont respectivement obtenus par réaction d'isocyanates oligomérisés par formation d'isocyanate et/ou urétdione avec des amines monofonctionnelles.

8. Préparations d'urée selon l'une ou plusieurs des revendications 1 à 7, dans lesquelles 95 à 100 % en poids, par rapport au poids total des composants d'urée (A), respectivement présentent au moins un segment moléculaire de la formule générale (IVa)
-O-CO-NH-Y₁-NH-CO-NH- (IVa),
dans laquelle
Y₁ représente un radical hydrocarbure saturé ou non saturé, ramifié ou non ramifié contenant 4 à 20, de préférence 5 à 18, particulièrement préféré 6 à 13 atomes de carbone,
et respectivement ne présentent pas de segment moléculaire de la formule générale (IVb)
-O-CO-NH-Y₂-NH-CO-O- (IVb),
dans laquelle
Y₂ représente un radical hydrocarbure saturé ou non saturé, ramifié ou non ramifié contenant 4 à 20, de préférence 5 à 18, particulièrement préféré 6 à 13 atomes de carbone.

9. Préparations d'urée selon une ou plusieurs des revendications 1 à 8, dans lesquelles le solvant (C) est choisi dans le groupe consistant en des hydrocarbures aliphatiques, hydrocarbures cycloaliphatiques, terpènes, terpénoïdes, hydrocarbures aromatiques, chlorohydrocarbures, alcools, cétones, esters, éthers de glycol, éthers, amides, amides, sulfoxydes, sulfones, acétals et nitroalcanes.

10. Préparations d'urée selon une ou plusieurs des revendications 1 à 9, dans lesquelles le sel (D) est choisi dans le groupe consistant en (i) des liquides ioniques et/ou (ii) des sels de métaux alcalins, des sels de métaux alcalino-terreux et/ou des sels d'ammonium, avec des anions monovalents, du groupe consistant en halogénures, pseudohalogénures, formiates, acétates et/ou nitrates.

11. Préparations d'urée selon une ou plusieurs des revendications 1 à 10, les préparations consistant en (A) et (B); ou en (A), (B) et (C); ou en (A), (B) et (D).

12. Utilisation des préparations d'urée selon les revendications 1 à 11 comme adjuvants rhéologiques pour les milieux liquides.

13. Utilisation selon la revendication 12, l'adjuvant rhéologique étant un agent épaississant et/ou un agent thixotrope.

14. Milieu liquide comportant une préparation d'urée selon une ou plusieurs des revendications 1 à 11.

15. Milieu liquide selon la revendication 14, le milieu liquide étant choisi dans le groupe consistant en vernis et peintures, couleurs d'imprimerie, encres, pâtes pigmentaires, formulations de matières plastiques, préparations cosmétiques, formulations de matériaux de construction, formulations de céramiques, lubrifiants, masses de coulée, produits d'étanchéité, aérosols, adhésifs et formulations utilisées dans la production de pétrole brut et de gaz naturel.
